# EUROPEAN PATENT APPLICATION

(11) **EP 4 300 863 A1**
(43) Date of publication of application: **03.01.2024**
(21) Application number: 22778501.1
(22) Date of filing: 09.03.2022
(51) Int. Cl.: H04L 5/00

(54) **COMMUNICATION METHOD AND COMMUNICATION DEVICE**

(30) Priority: 02.04.2021 CN 202110362600
(71) Applicant: Huawei Technologies Co., Ltd., Shenzhen, Guangdong 518129 (CN)
(72) Inventor: ZHU, Yuanping, Shenzhen, Guangdong 518129 (CN); SHI, Yulong, Shenzhen, Guangdong 518129 (CN); CAO, Zhenzhen, Shenzhen, Guangdong 518129 (CN); LIU, Jing, Shenzhen, Guangdong 518129 (CN)
(74) Representative: Isarpatent
(86) International application number: PCT/CN2022/079866
(87) International publication number: WO 2022/206317

(57) **Abstract**

Embodiments of this application disclose a communication method and a communication device, to improve reliability of correctly routing a data packet. The method in embodiments of this application includes: A first donor node generates a first data packet, where the first data packet further includes first information, the first information may indicate a donor node to which a destination node of the first data packet belongs, or indicate a network segment to which a destination node of the first data packet belongs, or indicate whether a network segment to which a destination node of the first data packet belongs is a network segment controlled by the first donor node; and then the first donor node sends the first data packet to the destination node first node.

## Description

This application claims priority to Chinese Patent Application CN202110362600.2, filed with China National Intellectual Property Administration on April 2, 2021 and entitled "COMMUNICATION METHOD AND DEVICE", which is incorporated herein by reference in its entirety.

### TECHNICAL FIELD

Embodiments of this application relate to the communication field, and in particular, to a communication method and a communication device.

### BACKGROUND

To meet an ultra-high capacity requirement in a fifth generation (the fifth generation, 5G) system, high-frequency carriers that are eagerly concerned by virtue of more abundant frequency resources in comparison with a low-frequency carrier are selected as a main operating frequency band of the 5G system. As high-frequency carriers have a poor propagation characteristic, severe attenuation due to blocking, and a small coverage area, a large quantity of small cells need to be densely deployed in a hotspot area. Accordingly, costs of providing optical fiber backhaul for the large quantity of densely deployed small cells are high, and optical fiber deployment is difficult. Therefore, an integrated access and backhaul (integrated access and backhaul, IAB) technology for wireless relay is introduced to help resolve the foregoing problem, where both an access link (access link) and a backhaul link (backhaul link) in an IAB network use a wireless transmission solution, avoiding optical fiber deployment.

In the IAB network, an IAB node (IAB node) may provide a wireless access service for user equipment (user equipment, UE), and traffic data of the UE is transmitted by the IAB node to an IAB donor (IAB donor, or referred to as a donor node) through a wireless backhaul link. The IAB donor includes a central unit (centralized unit, CU) and a distributed unit (distributed unit, DU). Identifier management and routing configuration of the IAB node are centrally managed by the CU of the IAB donor. The identifier management of the IAB node includes allocation of a backhaul adaptation protocol (backhaul adaptation protocol, BAP) address (address) of the IAB node/IAB donor DU.

There may be a cross-donor networking scenario in the IAB network. In other words, IAB nodes managed by different IAB donors (or donor CUs) and IAB donor DUs may be connected to each other via one or more BH links. However, when different donor nodes configure BAP-layer node identifiers (BAP address) or BAP routing identifiers (BAP routing ID) for nodes controlled/managed by the donor nodes, different IAB donors may configure a same BAP address for different nodes, or configure a same BAP routing ID for different paths, resulting a BAP address conflict or a BAP routing ID conflict. When one or more nodes receive a data packet including a BAP routing ID, the one or more nodes cannot determine a specific destination node of the data packet and a specific routing path that is indicated by the BAP routing ID, and consequently the data packet may be incorrectly routed and transmitted.

In the case of the BAP address conflict, one BAP address may be considered by one or more nodes to have identified two or more different destination nodes. In the case of the BAP routing ID conflict, one BAP routing ID is considered by one or more nodes to have identified two or more different transmission paths. The one or more nodes herein is specifically the IAB donor, the IAB donor DU, or the IAB node.

### SUMMARY

Embodiments of this application provide a communication method and a communication device, to improve reliability of correctly routing a data packet.

A first aspect of embodiments of this application provides a communication method. The method includes: A first donor node generates a first data packet, where the first data packet includes first information, and the first information indicates a donor node to which a destination node of the first data packet belongs, or the first information indicates a network segment to which a destination node of the first data packet belongs, or the first information indicates whether a destination node of the first data packet belongs to a network segment controlled by the first donor node; and the first donor node sends the first data packet to a first node.

In the first aspect, the first donor node generates the first information, and generates the first data packet based on the first information. The first information may directly indicate the donor node to which the destination node of the first data packet belongs or the network segment to which the destination node of the first data packet belongs, or indicate whether the destination node of the first data packet belongs to a network segment controlled by a current node (for the first donor node, the current node is the first donor node) on which the first data packet is located. In a process of forwarding the first data packet, the first node may determine, with reference to the first information, a unique destination node from a plurality of nodes that are determined based on a destination address in the first data packet, so that reliability of correctly routing a data packet can be improved.

In a possible implementation, the first information is carried in a routing identifier that is in a backhaul adaptation protocol layer BAP layer packet header of the first data packet.

In a possible implementation, the first information is carried in a reserved bit that is in a backhaul adaptation protocol layer BAP layer packet header of the first data packet.

In a possible implementation, the first information is located in a first area of a header of the first data packet, the first data packet further includes second information, and the second information indicates that the first data packet includes the first information.

In a possible implementation, the method further includes: The first donor node sends routing configuration to the first node, where the routing configuration includes information about the donor node to which the destination node of the first data packet belongs or information about the network segment to which the destination node of the first data packet belongs.

In the foregoing possible implementation, before the first donor node sends the first data packet, the first donor node further needs to send the routing configuration to the first node and another node, and the first node or the another node may store the information about the donor node or the information about the network segment that is in the routing configuration. In other words, the destination node may be determined with reference to the first information in the first data packet, to improve feasibility of the solution.

In a possible implementation, the first information includes an identifier of the donor node to which the destination node of the first data packet belongs, or an identifier of the network segment to which the destination node of the first data packet belongs.

In a possible implementation, the first data packet is generated based on a second data packet, and the method further includes: The first donor node receives the second data packet, where the second data packet includes internet protocol IP header information; and the first donor node generates a routing identifier based on the IP header information.

In the foregoing possible implementation, the first donor node obtains the second data packet, and then generates a corresponding routing identifier based on the IP header information in the second data packet, where the routing identifier carries the first information.

In a possible implementation, the first data packet is generated based on a second data packet, and the method further includes: The first donor node receives the second data packet, where the second data packet includes IP header information; and the first donor node generates the first information based on the IP header information.

In the foregoing possible implementation, the first donor node may further determine the first information based on an association relationship between the IP header information in the second data packet and the first information, and then extend the first information to a BAP layer header of the second data packet.

In a possible implementation, the first donor node includes a donor CU and a donor DU, and the foregoing step that a first donor node generates a first data packet includes: The donor DU receives first indication information from the donor CU; and the donor CU generates the first data packet in response to the first indication information.

In the foregoing possible implementation, the first donor node may alternatively be a donor node in a form in which a donor CU is separated from a donor DU. The donor CU may indicate, via one piece of first indication information, the donor DU to generate the first data packet including the first information.

A second aspect of embodiments of this application provides a communication method. The method includes: A first node receives a first data packet, where the first data packet includes first information, and the first information indicates that a destination node of the first data packet does not belong to a network segment to which a previous-hop node of the first node belongs; and the first node generates a third data packet based on the first data packet, where the third data packet includes second information, and the second information indicates that the destination node of the first data packet belongs to a network segment to which a next-hop node of the first node belongs.

In the second aspect, the first node is a node at a boundary of network segments that are controlled by two donor nodes. When the first node receives the first data packet, and the first information in the first data packet indicates that a network segment in which the destination node of the first data packet is located does not belong to a network segment to which a node (namely, the previous-hop node of the first node) from which the first data packet comes belongs, because a network segment in which a descendent node of the first node is located belongs to the network segment to which the destination node belongs, the first node may change the first information to the second information, to indicate that the destination node belongs to the network segment to which the next-hop node of the first node belongs. Correspondingly, a changed first data packet is a second data packet, to prevent a subsequent node in the network segment from mistakenly considering the data packet as a data packet in another network segment, so as to ensure that the data packet is correctly routed.

In a possible implementation, the first data packet includes third information, and the third information indicates to change the first information to the second information.

In the foregoing possible implementation, the first node may alternatively change the first information to the second information only when the first data packet includes the third information. The third information may be a specific value of a routing identifier. In other words, the first information is changed when a routing identifier of the first data packet is the same as the specific value, so that reliability of correctly routing a data packet can be improved.

A third aspect of embodiments of this application provides a communication method. The method includes: A first node generates a first data packet, where the first data packet includes first information, and the first information indicates a destination node of the first data packet, or the first information indicates a network segment to which a destination node of the first data packet belongs, or the first information indicates whether a destination node of the first data packet belongs to a network segment to which the first node belongs; and the first node sends the first data packet to a second node.

In the third aspect, the first node generates the first information, and generates the first data packet based on the first information. The first information may directly indicate the donor node to which the destination node of the first data packet belongs or the network segment to which the destination node of the first data packet belongs, or indicate whether the network segment to which the destination node of the first data packet belongs belongs to a network segment to which a current node (the current node is the first node for the first node) on which the first data packet is located belongs. In a process of forwarding the first data packet, the second node may determine, with reference to the first information, a unique destination node from a plurality of nodes that are determined based on a destination address in the first data packet, so that reliability of correctly routing a data packet can be improved.

In a possible implementation, the first information is carried in a routing identifier that is in a backhaul adaptation protocol layer BAP layer packet header of the first data packet.

In a possible implementation, the first information is carried in a reserved bit that is in a backhaul adaptation protocol layer BAP layer packet header of the first data packet.

In a possible implementation, the first information is located in a first area of a header of the first data packet, the first data packet further includes second information, and the second information indicates that the first data packet includes the first information.

In a possible implementation, the first information includes an identifier of the destination node of the first data packet, or an identifier of the network segment to which the destination node of the first data packet belongs.

In a possible implementation, the first data packet is generated based on a second data packet, and the method further includes: The first node obtains the second data packet, where the second data packet includes user plane F1 tunnel endpoint information; and the first node generates a routing identifier based on the user plane F1 tunnel endpoint information.

In the foregoing possible implementation, the first node obtains the second data packet, and then generates the corresponding routing identifier based on the user plane F1 tunnel endpoint information in the second data packet, where the routing identifier carries the first information.

In a possible implementation, the first data packet is generated based on a second data packet, and the method further includes: The first node obtains the second data packet, where the second data packet includes user plane F1 tunnel endpoint information; and the first node generates the first information based on the user plane F1 tunnel endpoint information.

In the foregoing possible implementation, the first node may further determine the first information based on an association relationship between the user plane F1 tunnel endpoint information in the second data packet and the first information, and then extend the first information to a BAP layer header of the second data packet.

In a possible implementation, the first data packet is generated based on a second data packet, and the method further includes: The first node obtains the second data packet; and the first node generates a routing identifier based on one or more of a control plane F1 message type, a stream control transmission protocol SCTP association identifier, a terminal device identifier, an SCTP stream identifier, a non-F1 interface traffic type, and internet protocol IP header information that correspond to the second data packet.

In the foregoing possible implementation, the first node obtains the second data packet, and then may generate the routing identifier based on one or more of the control plane F1 message type, the stream control transmission protocol SCTP association identifier, the terminal device identifier, and the SCTP stream identifier, or may determine the routing identifier based on the non-F1 interface traffic type. Alternatively, for a second data packet of the non-F1 interface traffic type, IP header information of the second data packet is queried to determine the routing identifier, to improve flexibility of the solution.

In a possible implementation, the first data packet is generated based on a second data packet, and the method further includes: The first node obtains the second data packet; and the first node generates the first information based on one or more of a control plane F1 message type, an SCTP association identifier, a terminal device identifier, an SCTP stream identifier, a non-F1 interface traffic type, and IP header information that correspond to the second data packet.

In the foregoing possible implementation, the first node obtains the second data packet, and then may generate the first information based on one or more of the control plane F1 message type, the stream control transmission protocol SCTP association identifier, the terminal device identifier, and the SCTP stream identifier, or may determine the first information based on the non-F1 interface traffic type. Alternatively, for a second data packet of the non-F1 interface traffic type, IP header information of the second data packet is queried to determine the first information, and then the first information is extended to a BAP layer header of the second data packet, to improve flexibility of the solution.

In a possible implementation, the SCTP association identifier is based on one or more of an IP address of the first node, a port number of the first node, an IP address of a donor node of the first node, and a port number of the donor node of the first node.

In a possible implementation, the method further includes: The first node receives first indication information from a donor node of the first node; and the first node generates the first data packet in response to the first indication information.

In the foregoing possible implementation, the first node does not need to generate the first data packet each time, and generates the first data packet only after receiving the first indication information from the donor node of the first node, so that overheads can be reduced.

A fourth aspect of embodiments of this application provides a communication device, including a processing unit and a transceiver unit. The processing unit is configured to generate a first data packet, where the first data packet includes first information, and the first information indicates a donor node to which a destination node of the first data packet belongs, or the first information indicates a network segment to which a destination node of the first data packet belongs, or the first information indicates whether a destination node of the first data packet belongs to a network segment controlled by the communication device. The transceiver unit is configured to send the first data packet to a first node.

The communication device is configured to perform the method in the first aspect or any implementation of the first aspect.

A fifth aspect of embodiments of this application provides a communication device. The device includes a transceiver unit and a processing unit. The transceiver unit is configured to receive a first data packet, where the first data packet includes first information, and the first information indicates that a destination node of the first data packet does not belong to a network segment to which a previous-hop node of the first node belongs. The processing unit is configured to generate a third data packet based on the first data packet, where the third data packet includes second information, and the second information indicates that the destination node of the first data packet belongs to a network segment to which a next-hop node of the first node belongs.

The communication device is configured to perform the method in the second aspect or any implementation of the second aspect.

A sixth aspect of embodiments of this application provides a communication device. The device includes a processing unit and a transceiver unit. The processing unit is configured to generate a first data packet, where the first data packet includes first information, and the first information indicates a destination node of the first data packet, or the first information indicates a network segment to which a destination node of the first data packet belongs, or the first information indicates whether a destination node of the first data packet belongs to a network segment to which the communication device belongs. The transceiver unit is configured to send the first data packet to a second node.

The communication device is configured to perform the method in the third aspect or any implementation of the third aspect.

A seventh aspect of embodiments of this application provides a communication device, including a processor, a memory, and a communication interface. The processor is configured to execute instructions stored in the memory, to enable the communication device to perform the method provided in any one of the first aspect or the optional implementations of the first aspect. The communication interface is configured to receive or send an indication. For specific details of the communication device provided in the seventh aspect, refer to the first aspect or any one of the optional implementations of the first aspect. Details are not described herein again.

An eighth aspect of embodiments of this application provides a communication device, including a processor, a memory, and a communication interface. The processor is configured to execute instructions stored in the memory, to enable the communication device to perform the method provided in any one of the second aspect or the optional implementations of the second aspect. The communication interface is configured to receive or send an indication. For specific details of the communication device provided in the eighth aspect, refer to the second aspect or any one of the optional implementations of the second aspect. Details are not described herein again.

A ninth aspect of embodiments of this application provides a communication device, including a processor, a memory, and a communication interface. The processor is configured to execute instructions stored in the memory, to enable the communication device to perform the method provided in any one of the third aspect or the optional implementations of the third aspect. The communication interface is configured to receive or send an indication. For specific details of the communication device provided in the ninth aspect, refer to the third aspect or any one of the optional implementations of the third aspect. Details are not described herein again.

A tenth aspect of embodiments of this application provides a computer-readable storage medium. The computer-readable storage medium stores a program. When a computer executes the program, the method provided in any one of the first aspect or the optional implementations of the first aspect is performed.

An eleventh aspect of embodiments of this application provides a computer-readable storage medium. The computer-readable storage medium stores a program. When a computer executes the program, the method provided in any one of the second aspect or the optional implementations of the second aspect is performed.

A twelfth aspect of embodiments of this application provides a computer-readable storage medium. The computer-readable storage medium stores a program. When a computer executes the program, the method provided in any one of the third aspect or the optional implementations of the third aspect is performed.

A thirteenth aspect of embodiments of this application provides a computer program product. When the computer program product is executed on a computer, the computer performs the method provided in any one of the first aspect or the optional implementations of the first aspect.

A fourteenth aspect of embodiments of this application provides a computer program product. When the computer program product is executed on a computer, the computer performs the method provided in any one of the second aspect or the optional implementations of the second aspect.

A fifteenth aspect of embodiments of this application provides a computer program product. When the computer program product is executed on a computer, the computer performs the method provided in any one of the third aspect or the optional implementations of the third aspect.

### BRIEF DESCRIPTION OF DRAWINGS

FIG. 1 is a schematic diagram of an architecture of an IAB network system according to an embodiment of this application;
FIG. 2A and FIG. 2B are a schematic diagram of a user plane protocol and a control plane protocol according to an embodiment of this application;
FIG. 3-(a) is a schematic diagram of topology update between IAB donors according to an embodiment of this application;

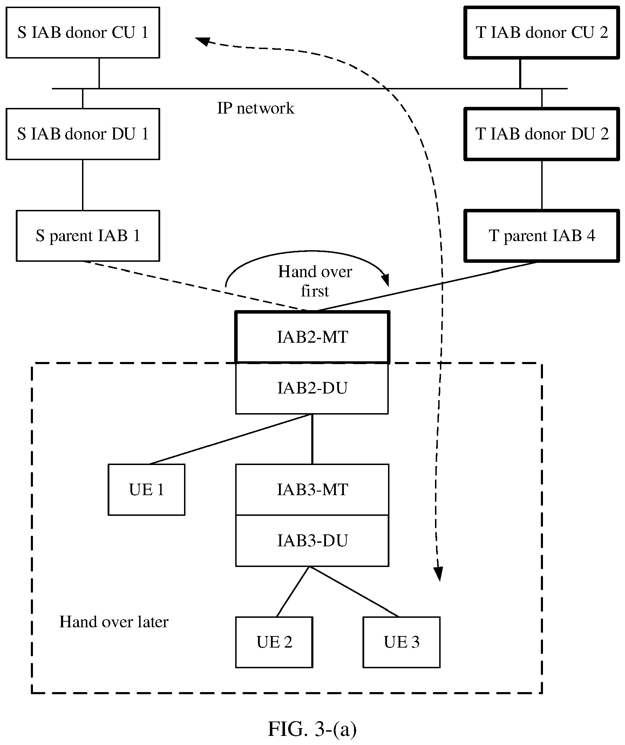

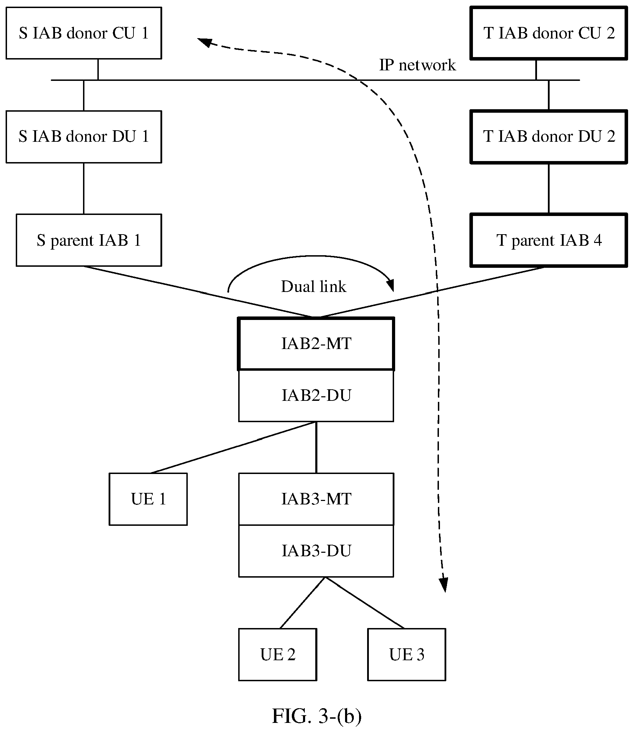

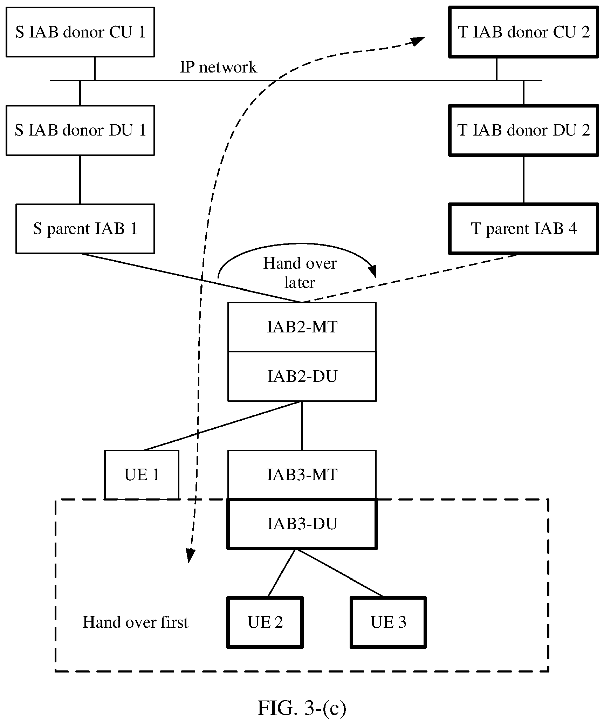

FIG. 3-(b) is another schematic diagram of topology update between IAB donors according to an embodiment of this application;
FIG. 3-(c) is still another schematic diagram of topology update between IAB donors according to an embodiment of this application;

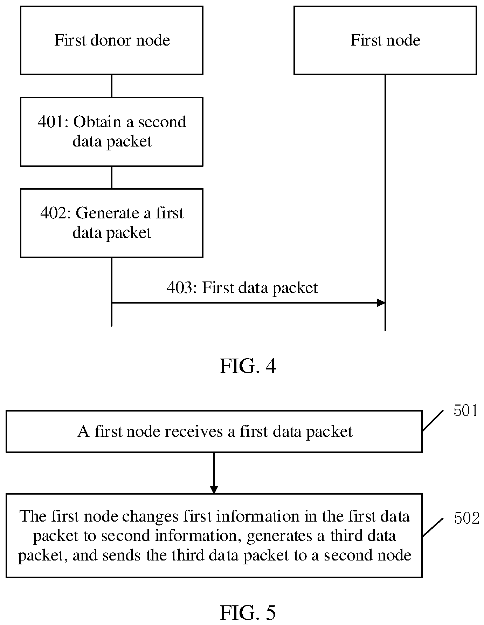

FIG. 4 shows an embodiment of a communication method according to an embodiment of this application;
FIG. 5 shows another embodiment of a communication method according to an embodiment of this application;

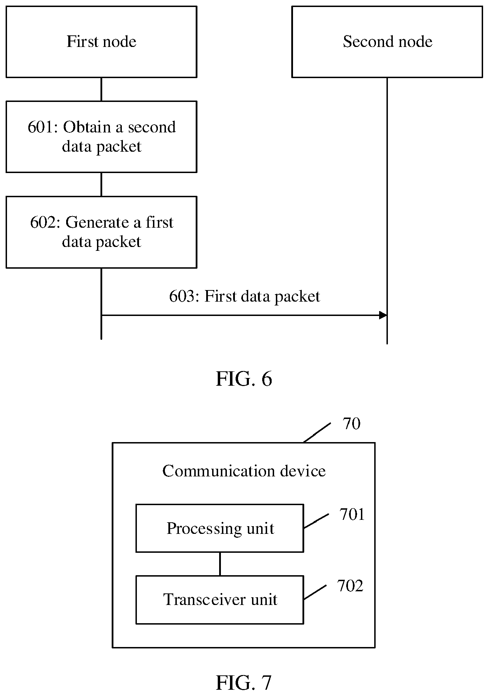

FIG. 6 shows still another embodiment of a communication method according to an embodiment of this application;
FIG. 7 is a schematic diagram of a structure of a communication device according to an embodiment of this application;

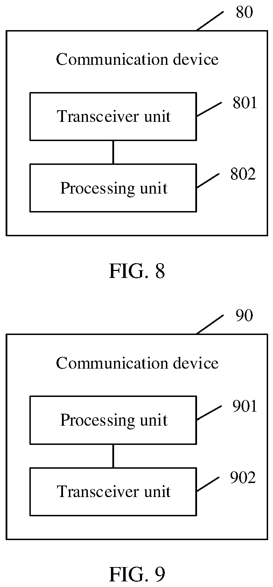

FIG. 8 is another schematic diagram of a structure of a communication device according to an embodiment of this application;
FIG. 9 is still another schematic diagram of a structure of a communication device according to an embodiment of this application;

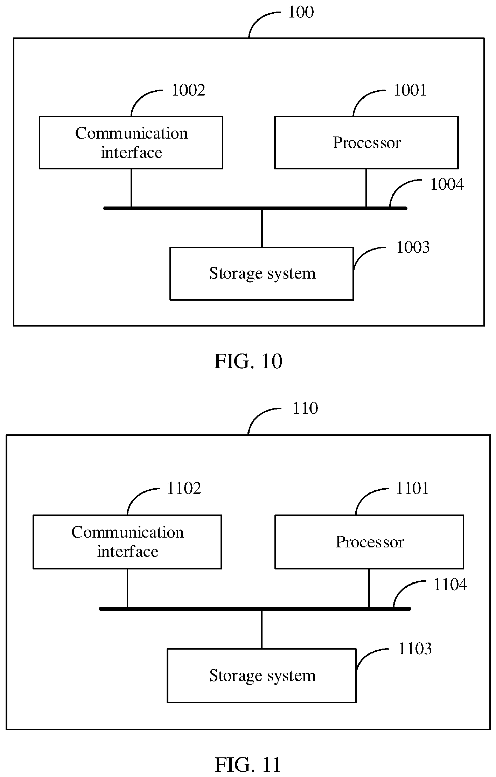

FIG. 10 is a schematic diagram of a structure of a communication device according to an embodiment of this application;
FIG. 11 is a schematic diagram of a structure of a communication device according to an embodiment of this application; and

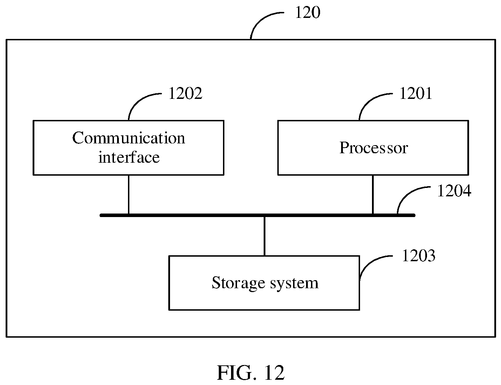

FIG. 12 is a schematic diagram of a structure of a communication device according to an embodiment of this application.

### DESCRIPTION OF EMBODIMENTS

Embodiments of this application provide a communication method and a communication device, to improve reliability of correctly routing a data packet.

The following describes embodiments of this application with reference to accompanying drawings. It is clear that the described embodiments are merely some but not all of embodiments of this application. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way is interchangeable in proper circumstances so that embodiments of the present invention described herein can be implemented in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some embodiments, methods, means, elements, and circuits that are well-known to a person skilled in the art are not described in detail, so that the subject matter of this application is highlighted.

Further, concepts in an IAB network are briefly described below.

### 1. Wireless backhaul node and donor node

In embodiments of this application, a node that supports integrated access and backhaul is referred to as a wireless backhaul node. In an LTE communication system, the wireless backhaul node may also be referred to as a relay node (relay node, RN). In 5G, the wireless backhaul node may also be referred to as an IAB node (IAB node). For ease of description, the IAB node is used as an example for description below.

The IAB node may provide a wireless access service for a terminal device, and data (which may include user plane data and control plane signaling) of the terminal device is transmitted by connecting the IAB node to the donor node through a wireless backhaul link.

In embodiments of this application, the donor node is also referred to as an IAB donor (IAB donor) or a donor gNodeB (donor gNodeB, DgNB). Specifically, the DgNB may be an access network element having a complete base station function, or may be an access network element in a form in which a central unit (centralized unit, CU) is separated from a distributed unit (distributed unit, DU). The DgNB is connected to a core network element serving the terminal device, for example, connected to a 5G core (5G core, 5GC) network, and provides a wireless backhaul function for the IAB node. For ease of description, in embodiments of this specification, a central unit of the donor node is briefly referred to as a donor CU (donor CU), and a distributed unit of the donor node is briefly referred to as a donor DU (donor DU). The donor CU may further be in a form in which a control plane (control plane, CP) is separated from a user plane (user plane, UP). For example, one CU includes one CU-CP and a plurality of CU-UPs. This is not limited in embodiments of this application.

2. Parent node, child node, grandchild node, grandparent node, downstream node, and upstream node

Each IAB node regards a neighboring node that provides a wireless access service and/or a wireless backhaul service for the IAB node as a parent node (parent node). Correspondingly, each IAB node may be regarded as a child node (child node) of the parent node of the IAB node. An IAB network may support multi-hop networking and multi-connectivity networking. Therefore, there may be a plurality of transmission paths between the terminal device and the donor node. On a specific transmission path, there is a determined hierarchical relationship between a terminal device and an IAB node that provides a wireless access service for the terminal device, between IAB nodes, and between an IAB node and a donor node that provides a backhaul service for the IAB node. A node that provides a wireless backhaul service for the IAB node is referred to as a parent node of the IAB node, or a node that provides a wireless access service for a terminal device is referred to as a parent node of the terminal device, the IAB node may be regarded as a child node of the parent node of the IAB node, and the terminal device may be regarded as a child node of the parent node of the terminal device. Herein, the parent node of the IAB node may be another IAB node, or may be a donor node. When the IAB node directly communicates with the donor node through a radio air interface, the parent node of the IAB node is the donor node.

For a node (an IAB node, an IAB donor, an IAB donor DU, or the like), a child node of a child node of the node may be regarded as a grandchild node of the node.

For a node (which may be an IAB node or UE), a parent node of a parent node of the node may be regarded as a grandparent node of the node.

Optionally, for a node, a child node or a grandchild node of the node may also be referred to as a lower-level node or a downstream node, and a parent node or a grandparent node of the node may also be referred to as an upper-level node or an upstream node.

Further, in a broader sense, a child node of a grandchild node of a node may also be regarded as a grandchild node of the node, and the rest can be deduced by analogy. In other words, a downstream node connected to the node through two or more wireless backhaul links may be regarded as a grandchild node of the node.

### 3. Intermediate IAB node

The intermediate IAB node is an IAB node that provides a wireless backhaul service for another IAB node (for example, an access IAB node or another intermediate IAB node), or is an IAB node on a path between an access IAB node and an IAB donor.

### 4. Access link

A wireless link used for communication between the terminal device and a node (for example, an IAB node, a donor node, or a donor DU) providing a wireless access service for the terminal device includes an access link used for uplink transmission and an access link used for downlink transmission. The access link used for uplink transmission is also referred to as an uplink access link or an access uplink, and a transmission direction of the access link is from the terminal device to the node. The access link used for downlink transmission is also referred to as a downlink access link or an access downlink, and a transmission direction of the access link is from the node to the terminal device. In this application, an access link of the terminal device is a wireless link. Therefore, the access link may also be referred to as a wireless access link.

### 5. Backhaul link

The backhaul link is a wireless link used for communication between an IAB node and a parent node of the IAB node. The parent node of the IAB node may be an IAB node or a donor node, and the backhaul link includes a backhaul link used for uplink transmission and a backhaul link used for downlink transmission. The backhaul link used for uplink transmission is also referred to as an uplink backhaul link or a backhaul uplink, and a transmission direction of the backhaul link is from the IAB node to the parent node of the IAB node. The backhaul link used for downlink transmission is also referred to as a downlink backhaul link or a backhaul downlink, and a transmission direction of the backhaul link is from the parent node of the IAB node to the IAB node. In this application, a backhaul link between an IAB node and a parent node is a wireless link. Therefore, the backhaul link may also be referred to as a wireless backhaul link.

### 6. Transmission path

The transmission path is a full route from a sending node to a receiving node. The path includes at least one link (link). In embodiments of this application, the link represents a connection between neighboring nodes. In other words, the transmission path is a transmission path that is between the sending node and the receiving node and that uses the sending node as a start point and uses the receiving node as an end point. Subsequently, for ease of description, the transmission path, on which the sending node serves as a start point and the receiving node serves as an end point, between the sending node and the receiving node may be described as a transmission path between the sending node and the receiving node.

In uplink transmission, any node, other than the donor node, between the terminal device and the donor node may be used as the sending node, and an upper-level node (for example, a parent node of the sending node or a parent node of the parent node) of the sending node is used as the receiving node. For example, the sending node may be an IAB node, the receiving node may be a parent node of the IAB node, and a full route between the IAB node and the parent node of the IAB node represents a transmission path. For another example, the sending node may be an IAB node, the receiving node may be the donor node, and a full route between the IAB node and the donor node represents a transmission path.

Similarly, in downlink transmission, the sending node may be any node, other than the terminal device, between the donor node and the terminal device, and the receiving node may be a lower-level node (for example, a child node of the sending node or a child node of the child node) of the sending node. For example, the sending node may be an IAB node, the receiving node may be a child node of the IAB node, and a full route between the IAB node and the child node of the IAB node represents a transmission path. For another example, the sending node may be an IAB node, the receiving node may be the terminal device, and a full route between the IAB node and the terminal device represents a transmission path.

An identifier of a previous-hop node or an identifier of a next-hop node identifier (previous-hop/next-hop node identifier for short hereinafter) in embodiments of this application may be a BAP address of the previous-hop/next-hop node, or may be an IP address of the previous-hop/next-hop node. In actual application, there may be another case. For example, when the previous-hop/next-hop node is a child node of a first IAB node, an identifier of the child node may be a C-RNTI of the child node and an identifier of a cell accessed by the child node, or may be a control plane identifier (for example, a gNB-DU UE FlAP ID allocated by the first IAB node to the child node, and/or a gNB-CU UE FlAP ID allocated by the donor CU to the child node) of the child node on an F1 interface between the first IAB node and the donor node (which may be a donor CU or a donor CU-CP). For another example, when the previous-hop/next-hop node is a parent node of the first IAB node, the identifier may be, for the first IAB node, an identifier (cell group ID) of a cell group corresponding to a cell group served by the parent node. A specific form of the identifier of the previous-hop/next-hop node is not limited herein.

The IAB node may alternatively be a terminal device UE, a residential gateway (residential gateway), or customer premises equipment (customer premise equipment, CPE).

In embodiments of this application, the communication device is an apparatus that is deployed in a radio access network and that provides a wireless communication function for user equipment (user equipment, UE). The communication device may include a macro base station, a micro base station (also referred to as a small cell), a relay station, an access point, and the like in various forms. In systems using different radio access technologies, a device having a base station function may have different names. For example, in a 5th generation (5th generation, 5G) system, the device is referred to as a wireless network access device, a gNB, or the like. For ease of description, in all embodiments of this application, all the foregoing apparatuses that provide a wireless communication function for a terminal are collectively referred to as a communication device, a base station, or a node.

UE in embodiments of this application may include various handheld devices, vehicle-mounted devices, wearable devices, or computing devices that have a wireless communication function, or other processing devices connected to a wireless modem. The terminal is a mobile station (mobile station, MS), a subscriber unit (subscriber unit), a cellular phone (cellular phone), a smartphone (smartphone), a wireless data card, a personal digital assistant (personal digital assistant, PDA for short) computer, a tablet computer, a wireless modem (modem), a handheld device (handset), a laptop computer (laptop computer), a machine type communication (machine type communication, MTC) terminal, or the like.

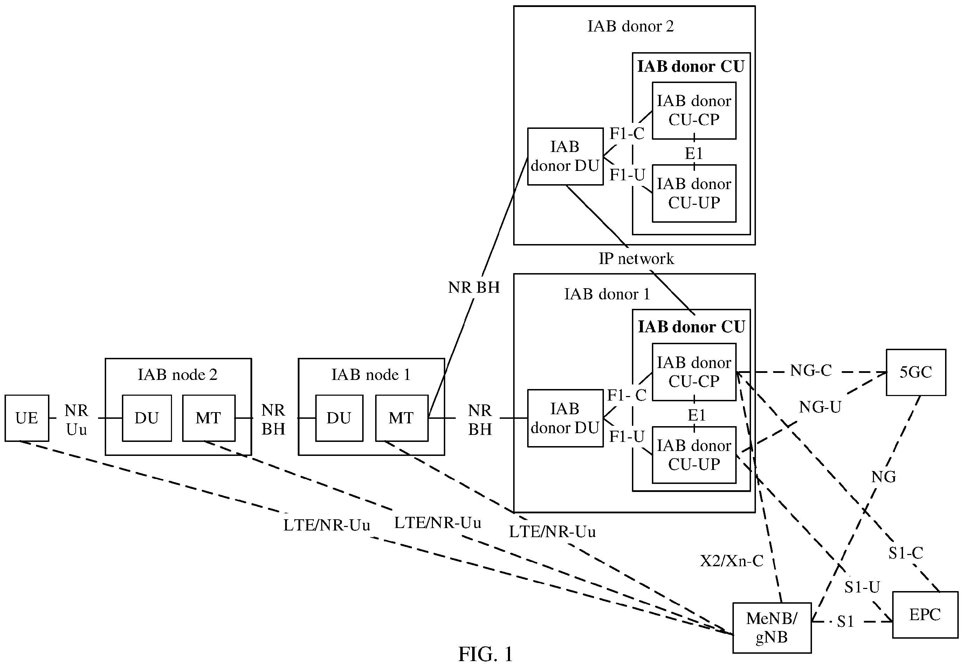

This application is mainly applied to an IAB network, including an IAB network of standalone (standalone, SA) networking and an IAB network of non-standalone (non-standalone, NSA) networking. FIG. 1 is a schematic diagram of an architecture of an IAB network system according to an embodiment of this application. The system architecture includes an IAB donor 1, an IAB donor 2, an IAB node 1, an IAB node 2, and UE.

There is an F1 interface between a DU part of each IAB node and an IAB donor CU. The F1 interface includes two parts: a control plane F1-C and a user plane F1-U. The user plane part is maintained between an IAB-DU and an IAB donor CU-UP, and the control plane part is maintained between the IAB-DU and an IAB donor CU-CP. Specifically, the F1 interface between the IAB-DU and the IAB donor CU is not shown in FIG. 1. The IAB donor DU is connected to an MT of the IAB node 1 (a DU of the IAB node 1 and an MT of the IAB node 2) through a new radio backhaul (new radio backhaul, NR BH), and a DU of the IAB node 2 is connected to the UE through an NR air interface (NR Uu). A CU of the IAB donor 1 and the DU of the IAB donor 2 (or a CU of the IAB donor 2 and the DU of the IAB donor 1) may further communicate with each other through an internet protocol (internet protocol, IP) network. This is not limited herein.

When the IAB node works in a SA mode, the IAB node may be single-connected to one parent node, or dual-connected to two parent nodes. The two parent nodes may be controlled by a same IAB donor, or respectively controlled by different IAB donors. An F1 interface needs to be established between a DU part of the IAB node and one IAB donor. The IAB donor may be connected to a 5G core (5G core, 5GC) network, that is, a dashed line part connected to the donor CU in the IAB donor 1 in the figure. The IAB donor CU-CP is connected to a control plane network element (for example, an access and mobility management function (access and mobility management function, AMF)) in the 5GC through an NG control plane (NG-C) interface. The IAB donor CU-UP is connected to a user plane network element (for example, a user plane function (user plane function, UPF)) in the 5GC through an NG user plane (NG-U) interface.

When the IAB node works in an NSA mode (or an EN-DC mode), the IAB node supports 4G and 5G network dual connectivity (E-UTRAN NR dual connectivity, EN-DC). Abase station eNB in a long term evolution (long term evolution, LTE) network is a master base station (master eNB, MeNB), provides an LTE air interface (LTE Uu) connection for the IAB node, and establishes an S 1 interface with an evolved packet core (evolved packet core, EPC) network of a 4G core network for user plane and control plane transmission. The IAB donor CU-UP may be connected to the EPC (for example, connected to a serving gateway (serving gateway, SGW)) through an S 1 user plane interface. The MeNB and an MT of the IAB node are connected through an LTE Uu air interface. There is an X2-C interface between the MeNB and the IAB donor CU-CP. The MeNB is connected to the evolved packet core (evolved packet core, EPC) network (including an S 1 interface user plane (S 1-U) and an S 1 interface control plane (S 1-C)) through the S 1 interface.

In another possible case, the MeNB in FIG. 1 may alternatively be replaced with a 5G base station gNB. The LTE-Uu interface in the dashed line part in the figure is correspondingly replaced with an NR-Uu interface. A user plane interface and/or a control plane interface may be established between the gNB and the 5GC, the gNB and the IAB donor provide a dual connectivity service for the IAB node, and the gNB may serve as a role of a master base station or a role of a secondary base station of the IAB node.

In the foregoing IAB network, a new protocol layer, namely, a backhaul adaptation protocol (backhaul adaptation protocol, BAP) layer, is introduced to the wireless backhaul link. The protocol layer is above a radio link control (radio link control, RLC) layer, a medium access control (medium access control, MAC) layer, and a physical (physical, PHY) layer. The protocol layer may be used to implement functions such as routing of a data packet on the wireless backhaul link and bearer mapping.

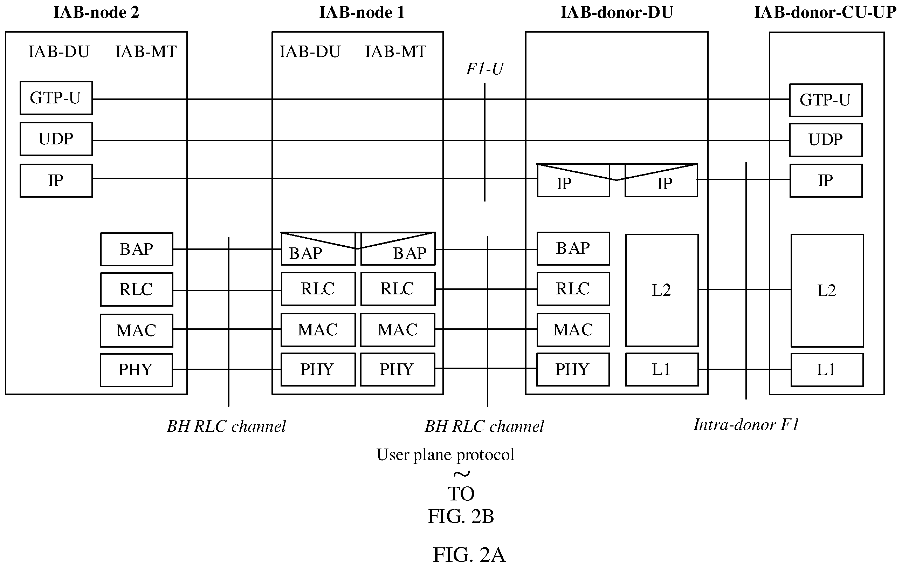

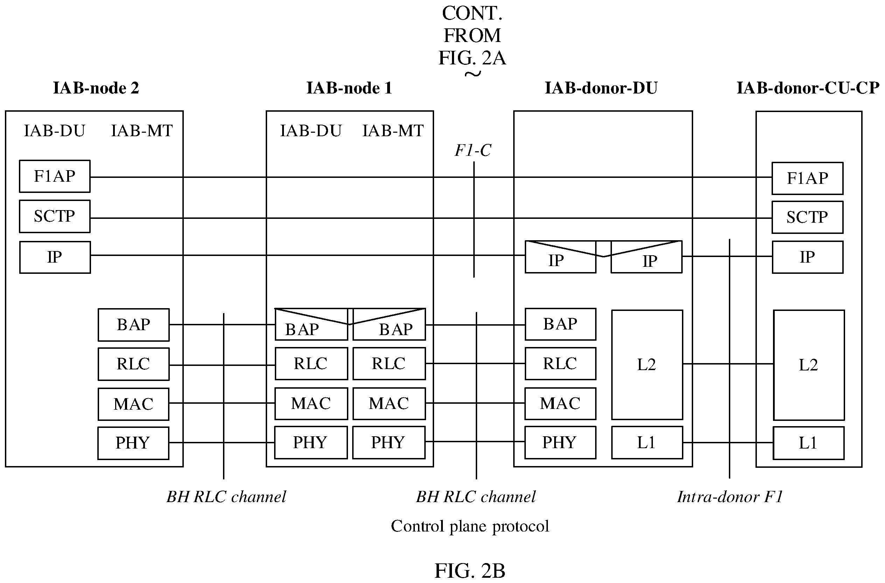

Refer to a schematic diagram of a user plane protocol and a control plane protocol shown in FIG. 2A and FIG. 2B. An F1 interface (or referred to as an F1* interface, which may be uniformly referred to as an F1 interface in this specification, but a name is not limited) needs to be established between an IAB node (a DU part of the IAB node) and a donor node (or an IAB donor CU). The interface supports a user plane protocol (F1-U) and a control plane protocol (F1-C). The user plane protocol includes one or more of the following protocol layers: a general packet radio service (general packet radio service, GPRS), a tunneling protocol user plane (GPRS tunneling protocol user plane, GTP-U), a user datagram protocol (user datagram protocol, UDP), an internet protocol (internet protocol, IP), and the like. The control plane protocol of the interface includes one or more of the following protocol layers: an F1 application protocol (F1 application protocol, FlAP), a stream control transmission protocol (stream control transport protocol, SCTP), an IP, and the like. There is an intra-donor F1 (Intra-donor F1) interface between the IAB donor CU and the IAB donor DU. A backhaul RLC channel (backhaul RLC channel, BH RLC CH) is further included between the IAB donor DU and the IAB node 1, and between the IAB node 1 and the IAB node 2.

For a multi-donor IAB network, in this embodiment of this application, cross-donor data transmission in IAB networking including two IAB donors is used as an example. For example, refer to schematic diagrams of topology update between IAB donors shown in FIG. 3-(a) to FIG. 3-(c). The IAB donor is in a form in which the CU is separated from the DU separation form. The IAB networking may include an S donor CU 1 of a source donor, an S donor DU 1 of the source donor, a T donor CU 2 of a target donor, an T donor DU 2 of the target donor, an S parent IAB node 1, an IAB node 2, an IAB node 3, and an T parent IAB node 4. The IAB node 2 may provide access and backhaul services for one or more UEs (or child nodes). FIG. 3-(a) to FIG. 3-(c) show one UE 1 that accesses one cell served by the IAB node 2, and a child node IAB node 3. There are still two UEs served by the IAB node 3: UE 2 and UE 3. The UE 2 and the UE 3 access a cell served by the IAB node 4. In an actual network deployment scenario, the IAB node 2 may further have one or more grandchild nodes (IAB nodes connected to the IAB node 2 through at least two hops of wireless backhaul links), and the IAB node 3 may further serve more UEs, child nodes, or grandchild nodes. These possible scenarios are not shown one by one in FIG. 3-(a) to FIG. 3-(c). However, it should be understood that these possible scenarios are not limited by the examples in the foregoing figures. A data packet of the source donor is handed over from a link to which the source donor belongs to a link to which the target donor belongs. After the IAB node 2 is handed over from a source parent node (the S parent IAB node 1 (S parent IAB 1 for short)) and is connected to a target parent node (the T parent IAB node 4 (T parent IAB 4 for short)), the IAB node 3, the UE 1, and the UE 2 that are descended from the IAB node 2 may also be handed over along with the IAB node 2. In a process in which the IAB node performs cross-IAB donor node handover, because both the IAB node and descendent nodes need to be connected to a new IAB donor through handover, there are many possibilities for an execution sequence, for example, from top to bottom, from bottom to top, or in any sequence. Therefore, in an entire process in which the IAB node, descendent UEs, and descendent IAB nodes perform migration, a case in which an MT part and a DU part of one IAB node are respectively connected to two different IAB donor nodes may occur. For details, refer to the schematic diagrams of topology update between IAB donors shown in FIG. 3-(a), FIG. 3-(b), and FIG. 3-(c).

For ease of description, in this embodiment of this application, these IAB nodes or UEs that are connected to an IAB donor via the IAB node 2 are referred to as descendent IAB nodes (descendent IAB nodes) or descendent UEs of the IAB node 2.

In an example shown in FIG. 3-(a), a node that first performs handover in the IAB networking is the IAB node 2. When an IAB2-MT has completed handover, an MT part (IAB2-MT for short) of the IAB node 2 has been connected to the T IAB donor CU 2. However, the IAB2-DU part is still connected to the source IAB donor CU 1, and a descendent child node (the IAB node 3) of the IAB node 2 and UEs (the UE 1, the UE 2, and the UE 3) are still connected to the IAB donor CU 1 (that is, the T IAB donor DU 2, the T parent IAB 4, and the IAB2-MT that are in current bold line boxes are managed or controlled by the target IAB donor, or belong to a network segment controlled by the T IAB donor CU 2, and other nodes or UEs in thin line boxes are managed or controlled by the source IAB donor node, or belong to a network segment controlled by the S IAB donor CU 1). In this case, the IAB node 3 still needs to communicate with the S IAB donor CU 1, and a related data packet needs to pass through (refer to a path indicated by a double-headed dashed line in the figure) the IAB node 2 (belonging to a node jointly managed by two IAB donors), and the T parent IAB node 4 and the T IAB donor DU 2 (both belonging to nodes managed by the T IAB donor CU 2). In addition, related data is further transmitted through an IP transmission network between the T IAB donor DU 2 and the S IAB donor CU 1.

In the example shown in FIG. 3-(b), the IAB node 2 first establishes a connection to a first parent node (namely, the S parent IAB 1), and then establishes a connection to a second parent node (namely, the T parent IAB 4) by adding a secondary station. The first parent node is connected to the S IAB donor CU 1, and the second parent node is connected to the T IAB donor CU 2. The DU part of the IAB node 2 is connected to the S IAB donor CU 1, but the MT part of the IAB node 2 is connected to both a cell served by the S parent IAB node 1 (specifically a DU part of the S parent IAB node 1) and a cell served by the T parent IAB node 4 (specifically a DU part of the T parent IAB node 4). All the child nodes and the descendent UEs of the IAB node 2 still maintain a connection relationship with the S IAB donor CU 1 (that is, the T IAB donor DU 2 and the T parent IAB 4 that are in current bold line boxes are managed or controlled by the target IAB donor, or belong to a network segment controlled by the T IAB donor CU 2, and other nodes or UEs in thin line boxes are managed or controlled by the source IAB donor node, or belong to a network segment controlled by the S IAB donor CU 1). Specially, the IAB2-MT part may maintain both dual links to parent nodes controlled by two different donor nodes. In this case, the IAB2-MT may be considered as a node controlled or managed by the source IAB donor. For example, when communicating with the S Parent IAB node 1, the IAB2-MT may be considered as a node managed or controlled by the source IAB donor, or belonging to a network segment controlled by the S IAB donor CU 1. In addition, the IAB2-MT may also be considered as belonging to a network segment controlled by the target IAB donor. For example, the IAB2-MT is on a path indicated by a double-headed dashed line, and may also be considered, like other nodes in bold line boxes, as managed or controlled by the target IAB donor, or belonging to a network segment controlled by the T IAB donor CU 2. Alternatively, in another possible manner, the IAB2-MT may be considered as a node controlled or managed by a donor node that maintains an RRC connection of the IAB2-MT, or belonging to a network segment controlled by a donor node that maintains an RRC connection of the IAB2-MT. For example, the RRC connection of the IAB2-MT is maintained between the IAB2-MT and the S IAB donor CU 1. In this case, a node managed by the IAB2-MT may be considered as a node controlled or managed by the source IAB donor. Therefore, both traffic of UE served by the IAB node 2 and traffic of the IAB node 3 (including traffic of the descendent UE 2 and UE 3) may be transmitted via the IAB node 2, the T parent IAB node 4, and the T IAB donor DU 2 (refer to the path indicated by the double-headed dashed line in the figure).

In the example shown in FIG. 3-(c), the IAB node 2 and the descendent nodes perform handover from the S IAB donor CU 1 to the T IAB donor CU 2. The IAB node 2 and the descendent nodes are considered as a group. If the handover is performed from bottom to top, the descendent nodes perform the handover first, and the MT of IAB node 2 performs the handover last. In this case, if the IAB3-DU, the UE 2, and the UE 3 have been handed over and connected to the T IAB donor CU 2, and the IAB node 2 is still connected to the S parent IAB node 1 (that is, the T IAB donor DU 2, the T parent IAB 4, the IAB3-DU part, the UE 2, and the UE 3 that are in current bold line boxes are managed or controlled by the target IAB donor, or belong to a network segment controlled by the T IAB donor CU 2, and other nodes or UEs in thin line boxes are managed or controlled by the source IAB donor node, or belong to a network segment controlled by the S IAB donor CU 1), although the IAB3-DU is already managed by the T IAB donor CU 2, a control plane of the MT part of the IAB3-DU is still connected to the S IAB donor CU 1, and data and signaling between the IAB3-DU part and the IAB donor CU 2 need to be transmitted (refer to a path indicated by a double-headed dashed line in the figure) via nodes (the IAB node 2, the S parent IAB node 1, and the S IAB donor DU 1) controlled by the S IAB donor CU 1. Therefore, on the transmission path, nodes controlled by two different IAB donors are also included.

In the foregoing several cases, in a wireless backhaul network, nodes controlled by different IAB donors need to be combined to form a transmission path for traffic transmission. In the case of cross-donor networking, IAB nodes managed by different donors and the IAB donor DUs may be connected to each other via one or more backhaul links (BH links). However, when the different donor nodes configure a BAP-layer node identifier (BAP address) or a BAP routing identifier (BAP routing ID) for the nodes controlled/managed by the donor nodes, different IAB donors may configure a same BAP address for different nodes subordinated to the different IAB donors, or configured a same BAP routing ID for different paths, that is, a problem of a BAP address or a BAP routing ID conflict occurs. Consequently, when a node receives or some nodes receive a data packet including a BAP routing ID, the node or the some nodes cannot determine a specific destination node of the data packet and a specific routing path that is indicated by the BAP routing ID, and the data packet may not be correctly routed and transmitted.

To resolve the foregoing problem, an embodiment of this application provides a communication method, so that indication information of a donor to which a destination node belongs can be added to a BAP layer of a data packet, thereby improving reliability of correctly routing the data packet. Details are as follows.

As shown in FIG. 4, an embodiment of the communication method in embodiments of this application includes the following steps.

401: A first donor node obtains a second data packet.

In this embodiment of this application, the first donor node may generate the second data packet (for example, the first donor node generates control plane signaling and encapsulates the control plane signaling into the second data packet, or the first donor node receives a user plane data packet from a core network element and then encapsulates the user plane data packet into the second data packet). Alternatively, the second data packet may be received from a second donor node. For example, the first donor node includes a donor DU and a donor CU. The first donor node in this step is the DU of the first donor node, and the second data packet may be a data packet that is received by the DU of the first donor node through a transmission network node and that is from the second donor node (which may be specifically a CU of the second donor node). Alternatively, the first donor node includes a donor DU and a donor CU. The first donor node in this step is the DU of the first donor node. In this case, the first data packet may alternatively be a data packet sent by the CU of the first donor node to a DU of the donor node. The second data packet includes IP header information, and the IP header information includes an IP address of a destination node and an IP address of a source node. In a possible manner, the second data packet is a downlink data packet.

402: The first donor node generates a first data packet.

In this embodiment of this application, the first donor node may generate the first data packet based on the second data packet. The first data packet includes the second data packet and a BAP layer header. The BAP layer header is generated by the first donor node based on the IP header information of the second data packet, and may include a routing identifier for transmitting the first data packet. The routing identifier may be a BAP routing ID (BAP routing identifier) or an extended BAP routing ID. The routing identifier may include a BAP layer identifier of a destination node (or destination node of the first data packet for short) of the first data packet on a wireless backhaul link, or a destination address (BAP address) of the first data packet on a wireless backhaul link. The routing identifier may further include a path label used to identify a path to the destination node, namely, a BAP path identifier (BAP path ID).

In a possible embodiment, the first data packet further includes first information. For example, the BAP layer header of the first data packet includes the first information. The first information may indicate a donor node to which the destination node of the first data packet belongs, or indicate a network segment to which the destination node of the first data packet belongs, or indicate whether a network segment to which the destination node of the first data packet belongs is a network segment controlled by the first donor node, or indicate whether a network segment to which the destination node of the first data packet belongs is the same as a network segment to which a current node (for the first donor node, the current node is the first donor node, and may be specifically a DU of the first donor node) belongs. Specifically, the first information may be an identifier of the donor node to which the destination node of the first data packet belongs, or may be an identifier of the network segment to which the destination node belongs, or the first information may be one-bit information, to indicate a relationship between a current network segment and the network segment to which the destination node belongs in a process of transmitting the first data packet.

In this embodiment of this application, a donor node (which may be specifically a CU of the donor node or a CU-CP part of the donor node) to which a node belongs is a donor node that controls the node. For example, an IAB node to which an IAB node belongs may be a donor node (which may be specifically a CU of the donor node or a CU-CP part of the donor node) that maintains an RRC connection with an MT part of the IAB node, or may be a donor node (which may be specifically a CU of the donor node or a CU-CP part of the donor node) that maintains an F1 interface (which may be specifically a control plane of the F1 interface) with a DU part of the IAB node.

In this embodiment of this application, a network segment to which a node belongs is a network segment that includes one or more nodes and that is controlled by a donor node (which may be specifically a CU of the donor node or a CU-CP part of the donor node) to which the node belongs. It may be understood that nodes controlled by different donor nodes form different network segments. In addition, the network segment in this application may alternatively be understood as a network topology or a network topology slice controlled by a donor node (which may be specifically a CU of the donor node or a CU-CP part of the donor node).

As described above, the IAB donor may be an access network element having a complete base station function, or may be an access network element in a form in which the CU is separated from the DU. In this embodiment, the form in which the CU is separated from the DU is used as an example, and the CU part may be in a form in which a user plane (UP) is separated from a control plane (CP). The identifier of the donor node in this application may be a base station identifier (gNB ID) of the donor node, or may be a CU identifier (CU ID) of the donor node, for example, an IP address of the CU (or the CU-CP of the donor node) of the donor node, or another identifier allocated by an operation administration and maintenance (operation administration and maintenance, OAM) entity to the CU of the donor node (or the CU-CP of the donor node). The OAM may configure different identifiers for adjacent donor nodes. The configured identifiers may be understood as identifiers of the donor node, or identifiers of CUs (or CU-CPs) used to identify different donor nodes. For example, in a case in which nodes controlled by four IAB donors are adjacent to each other, the OAM may allocate the following identifiers {00, 01, 10, 11} to four donor nodes (or donor CUs, or donor CU-CPs) respectively, to distinguish the four adjacent donor nodes.

The identifier of the network segment in this application may be an identifier of a donor node that controls a node in the network segment. For details about the identifier of the donor node, refer to descriptions in the previous paragraph. Alternatively, the identifier of the network segment may be a network segment identifier allocated by the OAM to each of different network segments. Alternatively, an identifier of a donor node and identifiers allocated by donor nodes to different network segments controlled by the donor nodes may be used for joint identification.

In this application, the first information may be bit information, and indicates whether a network segment to which the destination node of the first data packet belongs is a network segment controlled by the first donor node, or indicates whether a network segment to which the destination node of the first data packet belongs is the same as a network segment to which a current node (for the first donor node, the current node is the first donor node, and may be specifically a DU of the first donor node) belongs. In this case, for example, the first information may be one-bit information. When a value of the bit information is "0", it indicates that the network segment to which the destination node of the first data packet belongs is the network segment controlled by the first donor node or is the same as the network segment to which the first donor node (which may be specifically the DU of the first donor node) belongs. When a value of the bit information is "1", it indicates that the network segment to which the destination node of the first data packet belongs is not the network segment controlled by the first donor node or is different from the network segment to which the first donor node (which may be specifically the DU of the first donor node) belongs. In another example, the first information may indicate based on whether one-bit or multi-special bit information exists. When the one-bit or multi-bit information exists, it indicates that the network segment to which the destination node of the first data packet belongs is not the network segment controlled by the first donor node or is different from the network segment to which the first donor node (which may be specifically the DU of the first donor node) belongs. When no one-bit or multi-bit information exists, it indicates that the network segment to which the destination node of the first data packet belongs is the network segment controlled by the first donor node or is the same as the network segment to which the first donor node (which may be specifically the DU of the first donor node) belongs. This is not specifically limited herein.

In this embodiment, if the first donor node includes the donor DU (IAB donor DU) part and the donor CU (the IAB donor CU) part, and the first donor node in step 402 is the DU of the first donor node, the DU of the first donor node (IAB donor DU) adds BAP layer header information to the second data packet based on configuration information obtained from the CU (the IAB donor CU, or specifically the CP part of the CU of the first donor node, namely, the IAB donor CU-CP) of the first donor node. The configuration information may include a mapping relationship between IP header information and the foregoing routing identifier. The IP header information herein may include one or more pieces of IP address information (for example, a source IP address and/or a target IP address), and optionally, may further include any one or more of the following: a value of one or more differentiated services code point (differentiated services code point, DSCP) fields, and a value of a flow label (flow label) in one or more IPv6 headers. In a possible embodiment, the first information may be included in the routing identifier (for example, carried in the BAP routing ID, or the first information is carried in the BAP routing ID after the BAP routing ID is extended). In another possible embodiment, the first information may be carried in BAP layer header information of the first data packet, but is not in the routing identifier. Alternatively, the first information may be based on the IAB donor DU based on configuration information from the IAB donor CU. In this case, the configuration information obtained by the IAB donor DU of the first donor node from the IAB donor CU of the first donor node may further include a mapping relationship between the IP header information and the first information. For descriptions of the IP header information, refer to the foregoing descriptions. Optionally, the first information may be separately configured by the IAB donor CU for different pieces of specific IP header information. In other words, data packets having different pieces of IP header information may carry different first information.

The configuration information that includes the mapping relationship from the IP header information to the routing identifier and/or the first information may be sent by the IAB donor CU of the first donor node to the IAB donor DU of the first donor node via an FlAP message.

After receiving the second data packet, the first donor node may generate, based on the IP header information of the second data packet, BAP layer header information including the first information, and add the BAP layer header information to the second data packet, to obtain the first data packet.

For example, the first information is an identifier of a donor node to which the destination node of the first data packet on the wireless backhaul link belongs. Further, for example, the identifier of the donor node is an identifier of a CU (CU ID for short) of the donor node. Each donor node (which may be specifically a CU of the donor node) may obtain a CU ID of the donor node from the OAM. Each donor node (which may be specifically the CU of the donor node) may notify, via a control plane message, an IAB node or an IAB donor DU managed by the donor node (which may be specifically the CU of the donor node) of an identifier (for example, a CU ID) of the donor node. The control plane message may be an RRC message or an FlAP message. In a possible implementation, each donor node (which may be specifically an IAB donor CU) may configure a BAP address for each node (an IAB node or an IAB donor DU) managed by the donor node. The BAP address of each node may include an identifier of a donor node to which the node belongs.

In a possible embodiment, when configuring the BAP address for the IAB node or the IAB donor DU, the donor node may carry the CU ID of the donor node in the BAP address allocated to the IAB node or the IAB donor DU that is managed by the donor node, for example, carry the CU ID of the donor node in a most significant bit of the BAP address part configured for the node that is managed by the donor node. For the destination node of the first data packet, a BAP address of the destination node may also include a CU ID of the donor node to which the destination node belongs. Correspondingly, as shown in the following Table 1, the table shows a format of a data (data) protocol data unit (Packet data unit, PDU) at a BAP layer, where a D/C field indicates whether the BAP PDU is a BAP data (Data) PDU or a BAP control (control) PDU, an R field is a reserved bit, a DESTINATION field is a BAP address of a destination node (that is, a destination node of a wireless backhaul link) of a data packet, a PATH field is a label of a transmission path to the destination node of the data packet, and a DATA field is a data part, that is, a service data unit (SDU, service data unit) at the BAP layer. In a possible manner, content included in the DATA part is a part or all of the second data packet. Several bits in the DESTINATION field are a CU ID part. The DESTINATION field and the PATH field jointly form the BAP routing ID. It may be understood that the first data packet also complies with this format. In the BAP header information carried in the first data packet, the BAP address of the destination node included in a field of a DESTINATION part may include the CU ID of the donor node to which the destination node belongs. In this way, because CU IDs of different donor nodes are different, it can be ensured that, even in cross-donor networking, a BAP address part carried in a data packet may not considered to identify two different nodes (an IAB node or an IAB donor DU). A transmission path to a destination node may be uniquely identified based on a BAP routing ID carried in the data packet, so that a potential BAP address conflict or a BAP routing ID conflict is avoided.

**Table 1**

| D/C | R | R | R | (DESTINATION) CU ID |
|---|---|---|---|---|
| DESTINATION (continued) | | | | PATH |
| PATH (continued) | | | | |
| DATA | | | | |

In another possible embodiment, the first donor node (for example, the IAB donor DU) may generate the first information based on the IP header information of the second data packet, or may directly generate the first information. The first information is carried in a reserved bit (R) of the first data packet. The reserved bit may be specifically a reserved bit in a BAP layer packet header or a reserved bit in another packet header. This is not limited herein. When the first information is about donor node identifiers (for example, CU IDs of donor CUs) of different lengths, network segment identifiers of different lengths, and information about bits of different lengths, one or more reserved bits may be used to carry the CU IDs, the network segment identifiers, and the bit information. For example, if the first information is a network segment identifier or a CU ID, and a specific value range is {00, 01, 10, 11}, in this case, two reserved bits (for example, two R-bit fields close to a DESTINATION part in Table 1) may be used to carry the first information. In another possible example, the first information is bit information, and may be carried by using one reserved bit. For example, the first information is bit information S whose length is 1 bit. For a schematic diagram of the first data packet, refer to Table 2. For definitions of other fields in Table 2, refer to the explanations in Table 1. A slight difference is that a DESTINATION field in Table 2 does not need to include a CU ID part.

**Table 2**

| D/C | R | R | S | DESTINATION |
|---|---|---|---|---|
| DESTINATION (continued) | | | | PATH |
| PATH (continued) | | | | |
| DATA | | | | |

In still another possible embodiment, in the first data packet generated by the first donor node (for example, the IAB donor DU), the BAP layer header may be further extended. For example, after a BAP path ID, a first area (whose length is X bits) is additionally added, to carry the first information. This manner of extending the BAP layer header may alternatively be considered as a manner of extending a routing identifier BAP routing ID part. To be specific, the first information carried after extension is combined with the BAP address of the destination node of the data packet and the BAP Path ID part to the destination node, to be jointly considered as the routing identifier BAP routing ID. For example, the first information is a CU ID. As shown in Table 3, it needs to be indicated, in a BAP layer header of a data packet, that an extension field including the CU ID exists in the BAP layer header. For example, one (an S field in Table 3) of three reserved bits (R) in the BAP layer header in Table 1 are used to carry second information, and the second information indicates that the first data packet includes the first information. In other words, when the second information is a specific value, it indicates that BAP layer header information of a BAP data PDU includes a CU ID part. In this way, the CU ID part in the BAP layer header in the first data packet can be prevented from being parsed into a data (DATA) part. In this embodiment, any reserved bit (R) may be used as an S bit. This is not limited in this embodiment.

**Table 3**

| D/C | R | R | S | DESTINATION |
|---|---|---|---|---|
| DESTINATION (continued) | | | | PATH |
| PATH (continued) | | | | |
| CU ID | | | | |
| DATA | | | | |

Optionally, the first donor node may carry the first information after processing only some downlink data packets, for example, carry the first information only for a downlink data packet to be transmitted across donor networks. In this case, if the first donor node includes the donor DU (the IAB donor DU) part and the donor CU (the IAB donor CU) part, and the first donor node in step 402 refers to the DU of the first donor node, the DU of the first donor node (the IAB donor DU) obtains, based on configuration information obtained from the CU (the IAB donor CU, or specifically the CP part of the CU of the first donor node, namely, the IAB donor CU-CP) of the first donor node, a specific downlink data packet for which the first information needs to be carried. For example, if the IAB donor DU uses a manner corresponding to Table 2 or Table 3, in a manner of carrying the first information in the first data packet by using a reserved field or extending the BAP layer header, the IAB donor CU may carry first indication information in the configuration information provided for the IAB donor DU. The first indication information indicates that for a data packet that carries a specific IP header information value, the IAB donor DU needs to extend the BAP layer header to carry the first information, or add the first information to a reserved bit. In response to the first indication information, when the IP header information of the second data packet belongs to the value of the specific IP header information, the IAB donor DU may generate the first data packet including the first information. The IP header information herein may include one or more specific items of the following content: a source IP address, a destination IP address, one or more DSCP values, and one or more flow label values. When the BAP layer header needs to be extended to carry the first information, the IAB donor CU further needs to configure, for the IAB donor DU, the first information that needs to be carried in the BAP layer header of the data packet. In a possible implementation, in the configuration information provided by the IAB donor CU for the IAB donor DU, the first information may correspond to one or more pieces of IP header information. Optionally, the first information corresponding to specific IP header information may be carried, together with the first indication information, in a control plane message sent to the IAB donor DU, to be configured for the IAB donor DU. In another possible embodiment, the first indication information may be implicitly provided for the IAB donor DU. For example, in the configuration information provided for the IAB donor DU, only BAP layer header information of configuration information that corresponds to a value of specific IP header information includes the first information. In this case, it implicitly means that the configuration information corresponding to the value of the specific IP header information includes the first indication information. In response to the first indication information, when the IP header information of the second data packet belongs to the value of the specific IP header information, the IAB donor DU may generate the first data packet including the first information. In a preferred embodiment, the explicit or implicit first indication information may alternatively be directly sent to the IAB donor DU together with the configuration information of the mapping relationship from the IP header information to the routing identifier and/or the first information, or is directly included in the configuration information.

403: The first donor node sends the first data packet to a first node.

After generating the first data packet, the first donor node may send the first data packet to a next-hop node (namely, the first node) based on a routing identifier in the BAP layer header of the first data packet. If the first donor node includes the donor DU (the IAB donor DU) part and the donor CU (the IAB donor CU) part, the first donor node in this step may be the donor DU of the first donor node. The donor DU may obtain first routing configuration information from the donor CU in advance. The donor DU may determine, based on the first routing configuration information and the BAP layer header information of the first data packet, that the next-hop node is the first node. Then, the donor DU sends the first data packet to the first node. In a possible example, the first information is not included in the routing identifier part of the BAP layer, and the first routing configuration information obtained by the donor DU from the donor CU includes: the first information, the routing identifier BAP routing ID, and an identifier of the next-hop node (the first node) of the donor DU that corresponds to the first information and the routing identifier. In another possible example, the first information is included in the routing identifier (BAP routing ID) of the BAP layer header, and the first routing configuration information obtained by the donor DU from the donor CU includes: the routing identifier BAP routing ID and an identifier of the next-hop node (the first node) of the donor DU that corresponds to the routing identifier.

In a subsequent step, the first node may perform receiving processing on the first data packet still based on the routing identifier or based on the routing identifier and the first information, for example, deliver the first data packet to an upper layer protocol layer, or continue to forward the first data packet. Optionally, the first donor node (which may be specifically the donor CU of the first donor node, or the donor CU-CP) may further send second routing configuration information to a subsequent IAB node such as the first node and a child node or a grandchild node of the first node. In a possible manner, the first information is not included in the routing identifier part of the BAP layer, and the second routing configuration information may include the following content: the first information, the routing identifier BAP routing ID, and an identifier of a next-hop node of the subsequent IAB node that corresponds to the first information and the BAP routing ID. In another possible manner, the first information is included in the BAP layer routing identifier (BAP routing ID), and the second routing configuration information may include: the routing identifier BAP routing ID and an identifier of a next-hop node of the subsequent IAB node that corresponds to the BAP routing ID. Based on the second routing configuration information and information (for example, the routing identifier of the BAP layer, and the first information) in the BAP layer header in the first data packet, a subsequent IAB node such as the first node may process the first data packet. For example, the BAP layer header of the first data packet includes the first information and the BAP routing ID, and the first information is the CU ID of the donor node to which the target node belongs. In this case, when a BAP address part included in the BAP layer routing identifier (BAP routing ID) is consistent with a BAP address of the subsequent IAB node, and the CU ID indicated by the first information is consistent with a CU ID of a donor node to which the subsequent IAB node belongs, the subsequent node removes the BAP layer header from the first data packet, and then delivers the first data packet to an upper layer protocol layer (for example, an IP layer) for processing. Otherwise, the subsequent node may continue to select an appropriate next-hop node based on the second routing configuration information, and then forward the first data packet to the next-hop node.

In the manner in this embodiment of this application, even in a cross-donor networking scenario, a BAP address in a BAP routing identifier in a data packet may be prevented from indicating a plurality of destination nodes. Alternatively, even if a destination address in a BAP routing identifier in a data packet may indicate a plurality of nodes, a node (the IAB donor DU, or the IAB node) in the IAB network may further determine a unique destination node based on routing configuration information with reference to first information in the data packet. This can avoid a data packet routing failure caused by a destination address conflict in the cross-donor networking scenario, so that reliability of correctly routing a data packet can be improved.

Optionally, in an IAB topology networking scenario in which network segments controlled by only two IAB donors are concatenated, the first information in the first data packet may indicate (for example, a value of bit information corresponding to the first information is 1 or 0) whether the network segment to which the destination node of the first data packet belongs is the same as a network segment to which a current node (the current node herein is a node sending the first data packet) belongs. For a border IAB node at a boundary between two network segments, if the first information included in the first data packet received by the border IAB node indicates that a network segment to which a current node (namely, a previous-hop node of the border IAB node) belongs is different from the network segment to which the destination node of the first data packet belongs, after receiving the first data packet, the border node forwards the data packet to another network segment that is different from the network segment to which the previous-hop node belongs. Therefore, the border node may change the first information and generate a third data packet, so that a subsequent node can forward the third data packet to a destination node in a correct network segment after receiving the third data packet.

Correspondingly, as shown in FIG. 5, optionally, an embodiment of the communication method in embodiments of this application further includes the following steps.

501: A first node receives a first data packet.

The first data packet includes first information, the first information may be bit information (for example, an S bit whose value is 1), and the first information indicates that a network segment to which a current node (namely, a previous-hop node of the first node, where the first node receives the first data packet from the previous-hop node) belongs is different from a network segment to which a destination node of the first data packet belongs.

In this embodiment, for the first data packet in step 501, refer to related descriptions of the first data packet in step 402 in the method shown in FIG. 4. Details are not described herein again.

502: The first node changes the first information in the first data packet to second information, generates a third data packet, and sends the third data packet to a second node.

The second information obtained after the first information is changed may be bit information (for example, an S bit whose value is 0). The second information indicates that a network segment to which a current node (namely, the first node) belongs is the same as the network segment to which the destination node of the first data packet belongs. The second node is a next-hop node of the first node.

Optionally, the first information may further indicate whether the first data packet belongs to the network segment to which the destination node of the first data packet belongs. To be specific, the first node may determine, with reference to a network segment from which the received first data packet comes and the first information, that the network segment to which the destination node belongs is different from the network segment from which the received first data packet comes. The second information may further indicate that the first data packet belongs to the network segment to which the destination node of the first data packet belongs. To be specific, the first node may determine, with reference to a network segment to which a node to which the second data packet is to be sent belongs and the second information, that the network segment to which the destination node belongs is the same as the network segment to which the node to which the second data packet is to be sent belongs. This is not limited in this embodiment.

As shown in FIG. 3-(a), if a downlink data packet sent by an S IAB donor CU 1 to an IAB node 3 needs to be transmitted through a transmission path indicated by a solid line, BAP layer header information added to a T IAB donor DU 2 carries the first information indicating that the destination node is a node in a network segment controlled by another IAB donor, for example, carries an S bit, where S=1; and a routing identifier part in the BAP layer header information added to the T IAB donor DU 2 carries a BAP address of the IAB node 3 and a path identifier BAP path ID used to identify a path from the T IAB donor DU 2 to the IAB node 3 on the solid line path, where the BAP address of the IAB node 3 may be allocated by the IAB donor CU 1 that controls the IAB node 3.

After receiving the data packet from an IAB node 4, the first node IAB node 2 located on a border of the two network segments may forward the data packet to the IAB node 3 based on a BAP routing ID part. The IAB node 3 and an IAB 2-DU are located in a same network segment. Therefore, before forwarding the data packet to the IAB node 3, the IAB node 2 may change the first information to the second information. For example, the IAB node 2 may change the S bit, for example, changes a value of the S bit from 1 to 0, to generate the third data packet. Then, the IAB node 2 forwards the third data packet to the second node IAB node 3.

Optionally, if a node receives a data packet that does not include the S bit or in which a value of the S bit is 0, the node may only need to route and forward the data packet based on a routing identifier and a routing configuration obtained by the node, and does not need to change the S bit.

Optionally, in this embodiment, the first data packet further includes third information, and the third information indicates the first node to change the first information to the second information. Specifically, the third information may be a specific value of a routing identifier. To be specific, for example, for the first data packet with a specific routing identifier, if a value of the S bit is 1, the first node needs to change the value of the S bit to 0.

In a possible implementation, the first node obtains configuration information from a donor node (which may be specifically an IAB donor CU or an IAB donor CU-CP) to which the first node belongs. The configuration information includes the third information, and indicates whether the first node changes a data packet including the third information. If the first information included in the configuration information indicates that a network segment to which a current node (namely, a previous-hop node of the first node, where the first node receives the data packet from the previous-hop node) belongs is different from a network segment to which a destination node of the data packet belongs, the first node changes the first information in the data packet to the second information, and then forwards the data packet.

The foregoing first embodiment describes a downlink transmission manner in embodiments of this application. The following describes an uplink transmission manner. As shown in FIG. 6, another embodiment of the communication method in embodiments of this application includes the following steps.

601: A first node obtains a second data packet.

In this embodiment, the second data packet may be generated after being received by the first node from UE or a sub-node that accesses the first node and processed by the first node (for example, processed by a user plane or control plane protocol layer of an F1 interface of the first node). Alternatively, the second data packet may be generated by the first node (for example, a local protocol layer of the first node, such as an APP layer, a control plane of an F1 interface, or an upper-layer protocol layer corresponding to non-F1 interface traffic). This is not limited in this embodiment.

602: The first node generates a first data packet.

Specifically, the first node may add BAP layer header information to the second data packet, to obtain the first data packet. To be specific, the first data packet includes the second data packet and a BAP layer header. The BAP layer header may include a routing identifier for transmitting the first data packet. The routing identifier may be a BAP routing ID (BAP routing identifier) or an extended BAP routing ID. The routing identifier may include a BAP layer identifier of a destination node (or destination node of the first data packet for short) of the first data packet on a wireless backhaul link, or a destination address (BAP address) of the first data packet on a wireless backhaul link. The routing identifier may further include a path label used to identify a path to the destination node, namely, a BAP path identifier (BAP path ID). The destination node of the first data packet on the wireless backhaul link may be a donor node (for example, a donor DU of the donor node to which the first node belongs) to which the first node belongs. Alternatively, the destination node of the first data packet on the wireless backhaul link may be a DU of another donor node that is different from a donor node to which the first node belongs (for example, the first node is the IAB node 3 in FIG. 3-(a), where the IAB node 3 is an IAB node controlled by the S IAB donor; the destination node of the first data packet may be the T IAB donor DU2, where the T IAB donor DU2 is a DU part of the T IAB donor; and the first node and the destination node of the first data packet belong to different IAB donors). Alternatively, the destination node of the first data packet on the wireless backhaul link may be another IAB node controlled by a donor node to which the first node belongs, or another IAB node controlled by another donor node that is different from a donor node to which the first node belongs. This is not limited in this embodiment. In this embodiment, for a format of the first data packet, refer to related descriptions of several possible examples of the first data packet in the embodiment shown in FIG. 4. Details are not described herein again.

In a possible implementation, the first data packet further includes first information. For example, the BAP layer header of the first data packet includes the first information. The first information may indicate a donor node to which the destination node of the first data packet belongs, or indicate a network segment to which the destination node of the first data packet belongs, or indicate whether a network segment to which the destination node of the first data packet belongs is the same as a network segment to which a current node (namely, the first node) belongs.

In a possible implementation, the first node obtains configuration information from the donor node (which may be specifically an IAB donor CU or an IAB donor CU-CP of the donor node) to which the first node belongs. The first node adds, based on the obtained configuration information, BAP layer header information to an uplink data packet (namely, the second data packet) that needs to be transmitted, to generate the first data packet. Because the uplink data packet that needs to be transmitted by the first node may correspond to a plurality of different traffic types (including F1 interface user plane traffic, F1 interface control plane traffic, non-F1 interface traffic, and the like), the configuration information provided by the donor node (which may be specifically the IAB donor CU or the IAB donor CU-CP) to which the first node belongs for the first node may include mapping relationships applicable to the plurality of different traffic types, for example, a correspondence between the F1 interface user plane traffic, the F1 interface control plane traffic, or traffic of another traffic type (a non-F1 type) and the BAP layer header information (including, for example, a routing identifier).

In this embodiment of this application, a donor node to which an IAB node belongs is generally a donor node that maintains an RRC connection with an MT part of the IAB node and that maintains an F1 interface with a DU part of the IAB node. In most cases, donor nodes connected to an IAB-MT part and an IAB-DU part of an IAB node are the same. In this case, when providing configuration information for the IAB node, the donor node may carry the configuration information in an RRC message of the IAB-MT, or carry the configuration information in an FlAP message of the IAB-DU. However, in some special cases, donor nodes connected to the IAB-MT and the IAB-DU may be different. The border node IAB node 2 in FIG. 3-(a) is used as an example. An RRC connection of an MT part of the border node IAB node 2 is maintained by the target IAB donor node (which may be specifically the target IAB donor CU, namely, the T IAB donor CU 2). However, a DU part of the border node IAB node 2 is an F1 interface (an F1 interface control plane) established between the border node IAB node 2 and the source IAB donor node (which may be specifically the source IAB donor CU, namely, the S IAB donor CU 1). In this case, it may be considered that the IAB-MT and the IAB-DU respectively belong to different IAB donors or are managed or controlled by different IAB donors. The IAB node may receive, via an RRC message of the IAB-MT, configuration information from the donor node that maintains the RRC connection of the IAB-MT. Alternatively, the IAB node may receive, via an FlAP message of the IAB-DU, configuration information from a donor node that maintains the F1 interface (at least a control plane connection that establishes the F1 interface with the IAB-DU) of the IAB-DU.

For the F1 interface user plane traffic, configuration information used to configure a correspondence between an F1 interface user plane traffic data packet and the BAP layer header information (including, for example, a routing identifier) may include F1 interface user plane tunnel endpoint information of the data packet, and content corresponding to the BAP layer header information. In a possible implementation, in the configuration information for the F1 interface user plane traffic, the F1 interface user plane tunnel endpoint information may include an uplink tunnel endpoint identifier (tunnel endpoint identifier, TEID) of a GTP-U (GPRS Tunneling Protocol-User plane, GPRS Tunneling Protocol-User Plane) tunnel of the F1 interface user plane, and/or an IP address (namely, a target IP address of an uplink user plane data packet on the F1 interface, and may be specifically an IP address of the IAB donor CU or an IP address of the IAB donor CU-UP) of an uplink endpoint of a tunnel of the user plane. In addition, in the configuration information for the F1 interface user plane traffic, the content of the BAP layer header information may include a BAP routing identifier (BAP routing ID). The BAP routing identifier includes a BAP address of a destination node of the uplink data packet on the wireless backhaul link, and an identifier BAP path ID of a transmission path to the destination node. In a possible embodiment, alternatively, the first information may be included in the routing identifier (for example, carried in the BAP routing ID, or the first information is carried in the BAP routing ID after the BAP routing ID is extended). Therefore, the BAP routing identifier in the configuration information for the F1 interface user plane traffic includes the first information. In another possible embodiment, the first information may be carried in the BAP layer header information of the first data packet, but is not included in the routing identifier (BAP routing ID). In addition to the BAP routing identifier, the content of the BAP layer header information in the configuration information for the F1 interface user plane traffic may further include the first information. Optionally, the first information may be separately configured by the IAB donor CU for different F1 interface user plane data packets. In other words, data packets with different F1 interface GTP-U tunnel information may carry different first information.

In another possible implementation, in the configuration information for the F1 interface user plane traffic, the F1 interface user plane tunnel endpoint information may further be IP layer header information, and may specifically include: a source IP address, a destination IP address, one or more DSCP values or value ranges, and one or more flow label values or value ranges.

If the second data packet is an F1 interface user plane traffic data packet, the first node may select, based on the configuration information for the F1 interface user plane traffic, appropriate BAP layer header information corresponding to the F1 interface user plane tunnel endpoint information of the second data packet, and add the appropriate BAP layer header information to the second data packet, to obtain the first data packet.

Optionally, the first node may carry the first information after processing only some uplink data packets, for example, carry the first information only for an uplink data packet that needs to be transmitted across donor networks. In this case, the first node needs to obtain, based on configuration information obtained from the donor node (which may be specifically the IAB donor CU of the donor node, or may be specifically the IAB donor CU-CP, and the following uses an example in which the IAB donor CU provides the configuration information for the first node for description) to which the first node belongs, a specific uplink data packet that needs to carry the first information. For example, if the first node uses the manner corresponding to Table 2 or Table 3, in a manner of carrying the first information in the first data packet by using a reserved field or extending the BAP layer header, in a possible embodiment, the IAB donor CU may carry first indication information in the configuration information provided for the first node. The first indication information indicates an uplink data packet of a specific traffic type (which may be specifically an F1 interface user plane traffic, an F1 interface control plane traffic, or a non-F1 interface traffic) that needs the first node to extend a BAP layer header to carry the first information, or that carries the first information in a reserved bit. In response to the first indication information, when the second data packet is an uplink data packet of the specific traffic type, the first node may generate the first data packet including the first information. In another possible embodiment, the first indication information may be implicitly provided for the first node. For example, in the configuration information provided for the first node, only BAP layer header information corresponding to some specific traffic types includes the first information. In this case, it implicitly means that the configuration information for the some specific traffic types includes the first indication information. In response to the first indication information, when the second data packet is an uplink data packet of the some specific traffic types, the first node may generate the first data packet including the first information. It should be noted that, regardless of whether the first indication information is implicitly configured or explicitly configured information used to identify a specific traffic type, for details, refer to descriptions of the F1 interface user plane tunnel endpoint information in the configuration information for the F1 interface user plane traffic, F1 interface control plane traffic information in configuration information for the F1 interface control plane traffic, and non-F1 interface traffic information in configuration information for the non-F1 interface traffic for understanding. In a preferred embodiment, the explicit or implicit first indication information may alternatively be directly included in the configuration information for the F1 interface user plane traffic, the configuration information for the F1 interface control plane traffic, or the configuration information for the non-F1 interface traffic.

For the F1 interface control plane traffic, configuration information used to configure a correspondence between an F1 interface control plane traffic data packet and the BAP layer header information (including, for example, a routing identifier) may include F1 interface control plane traffic information of the data packet, and content corresponding to the BAP layer header information.

In the configuration information for the F1 interface control plane traffic, for the content of the BAP layer header information, refer to the content of the BAP layer header information in the foregoing configuration information for the F1 interface user plane traffic for understanding. The content of the BAP layer header information may specifically include a BAP routing identifier (BAP routing ID). The BAP routing identifier includes a BAP address of a destination node of the uplink data packet on the wireless backhaul link, and an identifier BAP path ID of a transmission path to the destination node. In a possible embodiment, alternatively, the first information may be included in the routing identifier (for example, carried in the BAP routing ID, or the first information is carried in the BAP routing ID after the BAP routing ID is extended). Therefore, the BAP routing identifier in the configuration information for the F1 interface control plane traffic includes the first information. In another possible embodiment, the first information may be carried in the BAP layer header information of the first data packet, but is not included in the routing identifier (BAP routing ID). In addition to the BAP routing identifier, the content of the BAP layer header information in the configuration information for the F1 interface control plane traffic may further include the first information.

In the configuration information that is for the F1 interface control plane traffic and that is provided by the donor node for the first node, content of the F1 interface control plane traffic information of the data packet may be considered in a plurality of possible cases. For example, the following plurality of possible cases may be used for description.

Case 1: In a possible embodiment, in the configuration information for the F1 interface control plane traffic, the F1 interface control plane traffic information may be an F1 interface control plane message type to which the data packet belongs. Specifically, there are two types of F1 interface control plane messages: a UE-associated (UE-associated) F1 interface control plane (F1-C) message (or referred to as an FlAP message), and a non-UE-associated (non-UE-associated) F1 interface control plane message. In this case, the donor node may configure different pieces of BAP layer header information for uplink FlAP messages of different types of the first node. It may be understood that specific values of the first information carried in the uplink FlAP messages of different types of the first node may be the same or may be different.

Case 2: In a possible embodiment, if F1-C messages of a same type of the first node are allowed to be transmitted through different paths, the first information may be carried in a more flexible configuration manner. For example, to allow F1-C messages transmitted via different SCTP associations (SCTP association, or transport network layer association (TNL association)) to use different transmission paths, the donor node (which may be specifically the IAB donor CU or the IAB donor CU-CP) of the first node may provide, for the first node based on an SCTP association (SCTP association, or referred to as transport network layer association, Transport network layer association, TNL association) granularity, BAP layer header information used to transmit an F1-C message in the configuration information, and may further carry the first indication information in the configuration information based on an SCTP association granularity. In this case, in the configuration information for the F1 interface control plane traffic, the F1 interface control plane traffic information includes an identifier of an SCTP association that carries a data packet. To distinguish different SCTP associations between the first node and the donor node (which may be specifically the IAB donor CU or the IAB donor CU-CP), optionally, an SCTP association identifier is based on one or more of an IP address of the first node, a port number of the first node, an IP address of the donor node (which may be specifically the IAB donor CU or the IAB donor CU-CP) of the first node, and a port number of the donor node (which may be specifically the IAB donor CU or the IAB donor CU-CP) of the first node. Therefore, in the configuration information provided by the donor node (which may be specifically the IAB donor CU or the IAB donor CU-CP) of the first node for the first node, different routing identifiers may be configured for F1-C messages carried by different SCTP associations. In addition, the first information that needs to be specifically carried is configured for a specific SCTP association that needs to carry the first information in a BAP layer header. Optionally, the first indication information may be further configured for the specific SCTP association that needs to carry the first information in the BAP layer header.

In another possible implementation of Case 2, for the configuration information that is for the F1 interface control plane traffic and that is provided by the donor node of the first node for the first node, specific configuration information may be further provided based on a granularity of a per SCTP association per F1-C message type. In this case, in the configuration information for the F1 interface control plane traffic, the F1 interface control plane traffic information includes an F1 interface control plane message type to which the data packet belongs and the identifier of the SCTP association that carries the data packet. For content of the F1 interface control plane message type and the SCTP association identifier, refer to the foregoing descriptions for understanding. Details are not described herein again.

For example, as shown in Table 4 and Table 5, there are four SCTP associations between the first node (an IAB node 1) and the donor node (an IAB donor CU 1) of the first node. An association 1 may be used to transmit a non-UE-associated FlAP message, associations 1 to 4 may all be used to transmit a UE-associated FlAP message, and data packets corresponding to associations 1 and 2 need to be routed across donors. In this case, the IAB donor CU 1 may provide configuration information to the IAB node 1 in the following two manners.

**Table 4**

| Association identifier | Routing identifier | First indication information (optional) | First information (optional) |
|---|---|---|---|
| Identifier of an association 1 | BAP routing ID 1 | Carry the first indication information | First information X |
| Identifier of an association 2 | BAP routing ID 2 | Carry the first indication information | First information Y |
| Identifier of an association 3 | BAP routing ID 3 | NULL | NULL |
| Identifier of an association 4 | BAP routing ID 3 | NULL | NULL |

**Table 5**

| Association identifier | F1-C message type | Route flag | First indication information (optional) | First information (optional) |
|---|---|---|---|---|
| Identifier of an association 1 | UE-associated | BAP routing ID 1 | Carry the first indication information | First information X |
| Identifier of an association 1 | Non-UE-associated | BAP routing ID 2 | Carry the first indication information | First information Y |
| Identifier of an association 2 | UE-associated | BAP routing ID 2 | Carry the first indication information | First information Y |
| Identifier of an association 3 | UE-associated | BAP routing ID 3 | NULL | NULL |
| Identifier of an association 4 | UE-associated | BAP routing ID 3 | NULL | NULL |

Case 3: In still another possible implementation, for an F1-C message of the UE-associated type, in a more flexible manner, different routing configurations are allowed to be provided for different UEs served by the first node. Therefore, for UE-associated F1-C traffic of the first node, the donor node of the first node can provide finer-granularity configuration. In this case, in the configuration information for the F1 interface control plane traffic, the F1 interface control plane traffic information includes one or more of the following pieces of information: the F1 interface control plane message type to which the data packet belongs, an identifier of specific UE corresponding to the data packet when the data packet is of the UE-associated type, an identifier of an SCTP association that carries the data packet, and a stream (stream) identifier in the SCTP association that carries the data packet. The identifier of the UE may be specifically any one of the following: identifier information (for example, a gNB-DU UE FlAP ID allocated by the first node to the UE, and/or a gNB-CU UE FlAP ID allocated, to the UE, by the donor node to which the first node belongs) allocated to the UE on the control plane of the F1 interface between the first node and the donor node, and a C-RNTI (Cell Radio Network Temporary Identifier cell radio network temporary identifier) allocated to the UE in a cell that is accessed by the UE and served by the first node. The stream (stream) identifier in the SCTP association that carries the data packet is a stream ID of a stream in an SCTP association that is used to carry an FlAP message. For content of the F1 interface control plane message type and the SCTP association identifier, refer to the foregoing descriptions for understanding. Details are not described herein again.

Corresponding to Case 3, the configuration information for the F1 interface control plane traffic may be provided for the first node by referring to the following four examples (Table 6 to Table 9). In Case 3, in an optimized signaling design, these configurations are oriented to F1-C messages of the UE-associated type. Therefore, content in a column of the F1-C message type may alternatively be uniformly carried as upper-level information, and does not need to be carried one by one.
(1) For a per UE configuration, refer to the following Table 6.

**Table 6**

| UE identifier | F1-C message type | Routing identifier | First indication information (optional) | First information (optional) |
|---|---|---|---|---|
| UE 1 | UE-associated | BAP routing ID 1 | Carry the first indication information | First information X |
| UE 2 | UE-associated | BAP routing ID 2 | Carry the first indication information | First information Y |
| UE 3 | UE-associated | BAP routing ID 3 | NULL | NULL |
| UE 3 | UE-associated | BAP routing ID 3 | NULL | NULL |

Alternatively, (2) for a per SCTP association per UE configuration, refer to the following Table 7.

**Table 7**

| UE identifier | Association identifier | F1-C message type | Routing identifier | First indication information (optional) | First information (optional) |
|---|---|---|---|---|---|
| UE 1 | Identifier of an association 1 | UE-associated | BAP routing ID 1 | Carry the first indication information | First information X |
| UE 2 | Identifier of an association 1 | UE-associated | BAP routing ID 2 | Carry the first indication information | First information Y |
| UE 3 | Identifier of an association 2 | UE-associated | BAP routing ID 3 | NULL | NULL |
| UE 3 | Identifier of an association 3 | UE-associated | BAP routing ID 3 | NULL | NULL |

Alternatively, (3) a per SCTP association per stream (stream) configuration (if a UE-associated FlAP message of one UE is carried on a stream of an SCTP association) is as follows.

**Table 8**

| Association identifier | Stream identifier | F1-C message type | Routing identifier | First indication information (optional) | First information (optional) |
|---|---|---|---|---|---|
| Identifier of an association 1 | Stream 1 | UE-as sociated | BAP routing ID 1 | Carry the first indication information | First information X |
| Identifier of an association 1 | Stream 2 | UE-as sociated | BAP routing ID 2 | Carry the first indication information | First information Y |
| Identifier of an association 2 | Stream 3 | UE-as sociated | BAP routing ID 3 | NULL | NULL |
| Identifier of an association 3 | Stream 4 | UE-as sociated | BAP routing ID 3 | NULL | NULL |

Alternatively, (4) a per SCTP association per stream and per UE configuration is as follows.

**Table 9**

| UE identifier | Association identifier | Stream identifier | F1-C message type | Routing identifier | First indication information (optional) | First information (optional) |
|---|---|---|---|---|---|---|
| UE 1 | Identifier of an association 1 | Stream 1 | UE-associated | BAP routing ID 1 | Carry the first indication information | First information X |
| UE 2 | Identifier of an association 1 | Stream 2 | UE-associated | BAP routing ID 2 | Carry the first indication information | First information Y |
| UE 3 | Identifier of an association 2 | Stream 3 | UE-associated | BAP routing ID 3 | NULL | NULL |
| UE 3 | Identifier of an association 3 | Stream 4 | UE-associated | BAP routing ID 3 | NULL | NULL |

For the non-F1 interface traffic (Non-F1 traffic) of the first node, configuration information used to configure a correspondence between a non-F1 interface traffic data packet and the BAP layer header information (including, for example, a routing identifier) may include non-F1 interface traffic information of the data packet, and content corresponding to the BAP layer header information.

In the configuration information for the non-F1 interface traffic, for the content of the BAP layer header information, refer to the content of the BAP layer header information in the foregoing configuration information for the F1 interface user plane traffic/control plane traffic for understanding. The content of the BAP layer header information may specifically include a BAP routing identifier (BAP routing ID). The BAP routing identifier includes a BAP address of a destination node of the uplink data packet on the wireless backhaul link, and an identifier BAP path ID of a transmission path to the destination node. In a possible embodiment, alternatively, the first information may be included in the routing identifier (for example, carried in the BAP routing ID, or the first information is carried in the BAP routing ID after the BAP routing ID is extended). Therefore, the BAP routing identifier in the configuration information for the non-F1 interface traffic includes the first information. In another possible embodiment, the first information may be carried in the BAP layer header information of the first data packet, but is not included in the routing identifier (BAP routing ID). In addition to the BAP routing identifier, the content of the BAP layer header information in the configuration information for the non-F 1 interface traffic may further include the first information.

In the configuration information that is for the non-F1 interface traffic and that is provided by the donor node for the first node, content of the non-F1 interface traffic information of the data packet may be considered in a plurality of possible cases. For example, the following plurality of possible cases may be used for description.

Case A: For uplink non-F1 interface traffic (Non-F1 traffic) of the first node, if the non-F1 interface traffic does not need to be subdivided, the IAB donor CU may directly configure, for the first node, BAP layer header information corresponding to a non-F1 traffic type. Optionally, the first indication information may be further configured. In this case, in the configuration information for the non-F1 interface traffic, the non-F1 interface traffic information is the non-F1 interface traffic type. For example, there is only one value "non-F1 traffic", or if subdivision for the non-F1 interface traffic type is allowed, there may be a plurality of values, for example, {a non-F1 traffic type 1, a non-F1 traffic type 2, a non-F1 traffic type 3, ...}.

Case B: It is assumed that different routes are allowed to be configured for the non-F1 interface traffic. For example, routes may be distinguished by using any one or more items of IP header information of the non-F1 interface traffic. The IP header information may include any one or more of the following IP 5-tuple information: {a source IP address, a destination IP address, a source port number, a destination port number, a transport layer protocol type}. The IP header information may further include a DSCP, a flow label field of a header field in an internet protocol version 6 (internet protocol version 6, IPv6), and the like. In this case, in the configuration information that is for the non-F1 interface traffic and that is provided by the IAB donor CU for the first node, different BAP layer header information may be configured for different values of the IP header information. Optionally, for traffic data that needs to be transmitted over a cross-donor network topology, corresponding configuration information may further include the first indication information, to indicate to carry the first information in a BAP layer header. In this case, in the configuration information for the non-F1 interface traffic, the non-F1 interface traffic information may include the non-F1 interface traffic type (for specific content, refer to the descriptions in Case A for understanding), and may further include the IP header information (for details, refer to the content descriptions of the IP header information in Case B for understanding).

603: The first node sends the first data packet to a second node.

After generating the first data packet, the first node may send the first data packet to a next-hop node (namely, the second node) based on BAP layer header information (for example, a routing identifier in the BAP layer header) of the first data packet. The first node may obtain first routing configuration information from the donor node (which may be specifically the donor CU or the donor CU-CP) to which the first node belongs in advance. The first node may determine, based on the first routing configuration information and the BAP layer header information of the first data packet, that the next-hop node is the second node. Then, the first node sends the first data packet to the second node. In a possible example, the first information is not included in the routing identifier part of the BAP layer, and the first routing configuration information obtained by the first node from the donor node includes: the first information, the routing identifier BAP routing ID, and an identifier of the next-hop node (the second node) of the first node that corresponds to the first information and the routing identifier. In another possible example, the first information is included in the routing identifier (BAP routing ID) of the BAP layer header, and the first routing configuration information obtained by the first node from the donor node includes: the routing identifier BAP routing ID and an identifier of the next-hop node (the second node) of the first node that corresponds to the routing identifier.

In a subsequent step, the second node may perform receiving processing on the first data packet still based on the routing identifier or based on the routing identifier and the first information, for example, deliver the first data packet to an upper layer protocol layer, or continue to forward the first data packet. Optionally, the donor node (which may be specifically the donor CU of the donor node, or the donor CU-CP) may further send second routing configuration information to a subsequent IAB node such as the second node. In a possible manner, the first information is not included in the routing identifier part of the BAP layer, and the second routing configuration information may include the following content: the first information, the routing identifier BAP routing ID, and an identifier of a next-hop node of the subsequent IAB node that corresponds to the first information and the BAP routing ID. In another possible manner, the first information is included in the routing identifier (BAP routing ID) of the BAP layer, and the second routing configuration information may include: the routing identifier BAP routing ID and an identifier of a next-hop node of the subsequent IAB node that corresponds to the BAP routing ID. Based on the second routing configuration information and information (for example, the routing identifier of the BAP layer, and the first information) in the BAP layer header in the first data packet, a subsequent node such as the second node may process the first data packet. For example, the BAP layer header of the first data packet includes the first information and the BAP routing ID, and the first information is the CU ID of the donor node to which the target node belongs. In this case, when a BAP address part included in the BAP layer routing identifier (BAP routing ID) is consistent with a BAP address of the subsequent IAB node, and the CU ID indicated by the first information is consistent with a CU ID of a donor node to which the subsequent IAB node belongs, the subsequent node removes the BAP layer header from the first data packet, and then delivers the first data packet to an upper layer protocol layer (for example, an IP layer) for processing. Otherwise, the subsequent node may continue to select an appropriate next-hop node based on the second routing configuration information, and then forward the first data packet to the next-hop node.

In the manner in this embodiment of this application, even in a cross-donor networking scenario, a BAP address in a BAP routing identifier in a data packet may be prevented from indicating a plurality of destination nodes. Alternatively, even if a destination address in a BAP routing identifier in a data packet may indicate a plurality of nodes, a node (the IAB donor DU, or the IAB node) in the IAB network may further determine a unique destination node based on routing configuration information with reference to first information in the data packet. This can avoid a data packet routing failure caused by a destination address conflict in the cross-donor networking scenario, so that reliability of correctly routing a data packet can be improved.

In this embodiment of this application, optionally, the first information may alternatively be identifier information that is of the donor node and that is carried in the IP layer header information of the second data packet, namely, the IP address (for example, a destination IP address in uplink data packets is an IP address of the IAB donor, and a source IP address of a data packet in downlink data packets is the IP address of the IAB donor) of the donor node. In this case, the first information may not be carried in the BAP layer header information. Correspondingly, optionally, the first indication information may alternatively be an identifier indicating that the BAP layer of the first donor node in FIG. 4 or the BAP layer of the first node in FIG. 6 to request an IP layer to indicate the donor node to which the destination node of the second data packet belongs. For example, for a downlink data packet, the IP layer may respond to the request information based on the IP source address in the IP header information. In other words, the configuration information received by the first donor node in FIG. 4 or the first node in FIG. 6 does not need to include the first information. Further, the BAP layer header information of the first data packet may carry the second information, to indicate that a node that receives the first data packet may obtain the first information from IP layer header information of the first data packet. For example, in the example in Table 2, the second information may be an S bit. For example, when a value of the S bit is "1", it indicates that the IP layer header information in the data packet includes the first information. Specifically, it may be that the source IP address or the destination IP address in the IP layer header information includes the first information. When a value of the S bit is 0, the node that receives the first data packet may not need to obtain information in the IP layer header as the first information, or does not need to obtain the first information.

In another possible manner, in addition to a CU ID, a network segment identifier, and bit information, the first information carried in the BAP layer header may further be request information (for example, the S bit in Table 2). The IAB node or the IAB donor DU may request, based on the request information, the IP layer to indicate the first information, that is, the donor to which the destination node of the first data packet belongs. The IP layer may respond to the request information based on IP address information (the source IP address and/or the destination IP address) included in the IP layer, and provide the first information for the BAP layer of the IAB node or the IAB donor DU, so that the IAB node or the IAB donor DU determines a unique destination node of the data packet.

The foregoing describes the communication method. The following describes a communication device in embodiments of this application with reference to accompanying drawings.

FIG. 7 is a schematic diagram of an embodiment of a communication device 70 according to an embodiment of this application.

As shown in FIG. 7, this embodiment of this application provides the communication device. The communication device includes:
a processing unit 701, configured to generate a first data packet, where the first data packet includes first information, and the first information indicates a donor node to which a destination node of the first data packet belongs, or the first information indicates a network segment to which a destination node of the first data packet belongs, or the first information indicates whether a destination node of the first data packet belongs to a network segment controlled by the communication device; and
a transceiver unit 702, configured to send the first data packet to a first node.

Optionally, the first information is carried in a routing identifier that is in a backhaul adaptation protocol layer BAP layer packet header of the first data packet.

Optionally, the first information is carried in a reserved bit that is in a backhaul adaptation protocol layer BAP layer packet header of the first data packet.

Optionally, the first information is located in a first area of a header of the first data packet, the first data packet further includes second information, and the second information indicates that the first data packet includes the first information.

Optionally, the transceiver unit 702 is further configured to send routing configuration to the first node, where the routing configuration includes information about the donor node to which the destination node of the first data packet belongs or information about the network segment to which the destination node of the first data packet belongs.

Optionally, the first information includes an identifier of the donor node to which the destination node of the first data packet belongs, or an identifier of the network segment to which the destination node of the first data packet belongs.

Optionally, the first data packet is generated based on a second data packet, and the transceiver unit 702 is further configured to:
receive the second data packet, where the second data packet includes internet protocol IP header information.

The processing unit 701 is further configured to:
generate the routing identifier based on the IP header information.

Optionally, the first data packet is generated based on a second data packet, and the transceiver unit 702 is further configured to:
receive the second data packet, where the second data packet includes IP header information.

The processing unit 701 is further configured to:
generate the first information based on the IP header information.

Optionally, the first donor node includes a donor CU and a donor DU, and the transceiver unit 702 is further configured to:
receive first indication information from the donor CU.

The processing unit 701 is further configured to:
generate the first data packet in response to the first indication information.

FIG. 8 is a schematic diagram of an embodiment of a communication device 80 according to an embodiment of this application.

As shown in FIG. 8, this embodiment of this application provides the communication device. The communication device includes:
a transceiver unit 801, configured to receive a first data packet, where the first data packet includes first information, and the first information indicates that a destination node of the first data packet does not belong to a network segment to which a previous-hop node of the communication device belongs; and
a processing unit 802, configured to generate a third data packet based on the first data packet, where the third data packet includes second information, and the second information indicates that the destination node of the first data packet belongs to a network segment to which a next-hop node of the communication device belongs.

Optionally, the first data packet includes third information, and the third information indicates to change the first information to the second information.

FIG. 9 is a schematic diagram of an embodiment of a communication device 90 according to an embodiment of this application.

As shown in FIG. 9, this embodiment of this application provides the communication device. The communication device includes:
a processing unit 901, configured to generate a first data packet, where the first data packet includes first information, and the first information indicates a destination node of the first data packet, or the first information indicates a network segment to which a destination node of the first data packet belongs, or the first information indicates whether a destination node of the first data packet belongs to a network segment to which the communication device belongs; and
a transceiver unit 902, configured to send the first data packet to a second node.

Optionally, the first information is carried in a routing identifier that is in a backhaul adaptation protocol layer BAP layer packet header of the first data packet.

Optionally, the first information is carried in a reserved bit that is in a backhaul adaptation protocol layer BAP layer packet header of the first data packet.

Optionally, the first information is located in a first area of a header of the first data packet, the first data packet further includes second information, and the second information indicates that the first data packet includes the first information.

Optionally, the first information includes an identifier of the destination node of the first data packet, or an identifier of the network segment to which the destination node of the first data packet belongs.

Optionally, the first data packet is generated based on a second data packet, and the processing unit 901 is further configured to:
obtain the second data packet, where the second data packet includes user plane F1 tunnel endpoint information; and
generate the routing identifier based on the user plane F1 tunnel endpoint information.

Optionally, the first data packet is generated based on a second data packet, and the processing unit 901 is further configured to:
obtain the second data packet, where the second data packet includes user plane F1 tunnel endpoint information; and
generate the first information based on the user plane F1 tunnel endpoint information.

Optionally, the first data packet is generated based on a second data packet, and the processing unit 901 is further configured to:
obtain the second data packet; and
generate the routing identifier based on one or more of a control plane F1 message type, a stream control transmission protocol SCTP association identifier, a terminal device identifier, an SCTP stream identifier, a non-F1 interface service type, and internet protocol IP header information that correspond to the second data packet.

Optionally, the first data packet is generated based on a second data packet, and the processing unit 901 is further configured to:
obtain the second data packet; and
generate the first information based on one or more of a control plane F1 message type, an SCTP association identifier, a terminal device identifier, an SCTP stream identifier, a non-F1 interface traffic type, and IP header information that correspond to the second data packet.

Optionally, the SCTP association identifier is based on one or more of an IP address of the communication device, a port number of the communication device, an IP address of a donor node of the communication device, and a port number of the donor node of the communication device.

Optionally, the transceiver unit 902 is further configured to:
receive first indication information from the donor node of the communication device.

The processing unit 901 is further configured to:
generate the first data packet in response to the first indication information.

FIG. 10 is a schematic diagram of a possible logical structure of a communication device 100 according to an embodiment of this application. The communication device 100 includes a processor 1001, a communication interface 1002, a storage system 1003, and a bus 1004. The processor 1001, the communication interface 1002, and the storage system 1003 are connected to each other through the bus 1004. In this embodiment of this application, the processor 1001 is configured to control and manage an action of the communication device 100. For example, the processor 1001 is configured to perform the steps performed by the first donor node in the method embodiment in FIG. 4. The communication interface 1002 is configured to support the communication device 100 in performing communication. The storage system 1003 is configured to store program code and data of the communication device 100.

The processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 1001 may be a combination of processors implementing a computing function, for example, a combination of one or more microprocessors, or a combination of the digital signal processor and a microprocessor. The bus 1004 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representing the bus in FIG. 10, but this does not mean that there is only one bus or only one type of bus.

The transceiver unit 702 in the communication device 70 is equivalent to the communication interface 1002 in the communication device 100. The processing unit 701 in the communication device 70 is equivalent to the processor 1001 in the communication device 100.

The communication device 100 in this embodiment may correspond to the first donor node in the method embodiment in FIG. 4. The communication interface 1002 in the communication device 100 may implement functions and/or steps implemented by the first donor node in the method embodiment in FIG. 4. For brevity, details are not described herein again.

FIG. 11 is a schematic diagram of a possible logical structure of a communication device 110 according to an embodiment of this application. The communication device 110 includes a processor 1101, a communication interface 1102, a storage system 1103, and a bus 1104. The processor 1101, the communication interface 1102, and the storage system 1103 are connected to each other through the bus 1104. In this embodiment of this application, the processor 1101 is configured to control and manage an action of the communication device 110. For example, the processor 1101 is configured to perform the steps performed by the first node in the method embodiment in FIG. 5. The communication interface 1102 is configured to support the communication device 110 in performing communication. The storage system 1103 is configured to store program code and data of the communication device 110.

The processor 1101 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor 1101 may alternatively be a combination, for example, a combination including one or more microprocessors or a combination of a digital signal processor and a microprocessor, for implementing a computing function. The bus 1104 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representing the bus in FIG. 11, but this does not mean that there is only one bus or only one type of bus.

The transceiver unit 801 in the communication device 80 is equivalent to the communication interface 1102 in the communication device 110. The processing unit 802 in the communication device 80 is equivalent to the processor 1101 in the communication device 110.

The communication device 110 in this embodiment may correspond to the first node in the method embodiment in FIG. 5. The communication interface 1102 in the communication device 110 may implement functions and/or steps implemented by the first node in the method embodiment in FIG. 5. For brevity, details are not described herein again.

FIG. 12 is a schematic diagram of a possible logical structure of a communication device 120 according to an embodiment of this application. The communication device 120 includes a processor 1201, a communication interface 1202, a storage system 1203, and a bus 1204. The processor 1201, the communication interface 1202, and the storage system 1203 are connected to each other through the bus 1204. In this embodiment of this application, the processor 1201 is configured to control and manage an action of the communication device 120. For example, the processor 1201 is configured to perform the steps performed by the first node in the method embodiment in FIG. 6. The communication interface 1202 is configured to support the communication device 120 in performing communication. The storage system 1203 is configured to store program code and data of the communication device 120.

The processor 1201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor 1201 may alternatively be a combination, for example, a combination including one or more microprocessors or a combination of a digital signal processor and a microprocessor, for implementing a computing function. The bus 1204 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representing the bus in FIG. 12, but this does not mean that there is only one bus or only one type of bus.

The transceiver unit 902 in the communication device 90 is equivalent to the communication interface 1202 in the communication device 120. The processing unit 901 in the communication device 90 is equivalent to the processor 1201 in the communication device 120.

The communication device 120 in this embodiment may correspond to the first node in the method embodiment in FIG. 6. The communication interface 1202 in the communication device 120 may implement functions and/or steps implemented by the first node in the method embodiment in FIG. 6. For brevity, details are not described herein again.

In another embodiment of this application, a computer-readable storage medium is further provided. The computer-readable storage medium stores computer-executable instructions. When a processor of a device executes the computer-executable instructions, the device performs the steps of the communication method performed by the first donor node in the method embodiment in FIG. 4.

In another embodiment of this application, a computer-readable storage medium is further provided. The computer-readable storage medium stores computer-executable instructions. When a processor of a device executes the computer-executable instructions, the device performs the steps of the communication method performed by the first node in the method embodiment in FIG. 5.

In another embodiment of this application, a computer-readable storage medium is further provided. The computer-readable storage medium stores computer-executable instructions. When a processor of a device executes the computer-executable instructions, the device performs the steps of the communication method performed by the first node in the method embodiment in FIG. 6.

In another embodiment of this application, a computer program product is further provided. The computer program product includes computer-executable instructions, and the computer executable instructions are stored in a computer-readable storage medium. When a processor of a device executes the computer-executable instructions, the device performs the steps of the communication method performed by the first donor node in the method embodiment in FIG. 4.

In another embodiment of this application, a computer program product is further provided. The computer program product includes computer-executable instructions, and the computer executable instructions are stored in a computer-readable storage medium. When a processor of a device executes the computer-executable instructions, the device performs the steps of the communication method performed by the first node in the method embodiment in FIG. 5.

In another embodiment of this application, a computer program product is further provided. The computer program product includes computer-executable instructions, and the computer executable instructions are stored in a computer-readable storage medium. When a processor of a device executes the computer-executable instructions, the device performs the steps of the communication method performed by the first node in the method embodiment in FIG. 6.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus and method may be implemented in another manner. The described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, each functional unit in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A communication method, comprising:
generating, by a first donor node, a first data packet, wherein the first data packet comprises first information, and the first information indicates a donor node to which a destination node of the first data packet belongs, or the first information indicates a network segment to which a destination node of the first data packet belongs, or the first information indicates whether a destination node of the first data packet belongs to a network segment controlled by the first donor node; and
sending, by the first donor node, the first data packet to a first node.

2. The communication method according to claim 1, wherein the first information is carried in a routing identifier that is in a backhaul adaptation protocol layer BAP layer packet header of the first data packet.

3. The communication method according to claim 1, wherein the first information is carried in a reserved bit that is in a backhaul adaptation protocol layer BAP layer packet header of the first data packet.

4. The communication method according to claim 1, wherein the first information is located in a first area of a header of the first data packet, the first data packet further comprises second information, and the second information indicates that the first data packet comprises the first information.

5. The communication method according to claim 1, wherein the method further comprises:
sending, by the first donor node, routing configuration to the first node, wherein the routing configuration comprises information about the donor node to which the destination node of the first data packet belongs or information about the network segment to which the destination node of the first data packet belongs.

6. The communication method according to claim 1, wherein the first information comprises an identifier of the donor node to which the destination node of the first data packet belongs, or an identifier of the network segment to which the destination node of the first data packet belongs.

7. The communication method according to claim 2, wherein the first data packet is generated based on a second data packet, and the method further comprises:
receiving, by the first donor node, the second data packet, wherein the second data packet comprises internet protocol IP header information; and
generating, by the first donor node, the routing identifier based on the IP header information.

8. The communication method according to claim 3 or 4, wherein the first data packet is generated based on a second data packet, and the method further comprises:
receiving, by the first donor node, the second data packet, wherein the second data packet comprises IP header information; and
generating, by the first donor node, the first information based on the IP header information.

9. The communication method according to claim 7 or 8, wherein the first donor node comprises a donor CU and a donor DU, and the generating, by a first donor node, a first data packet comprises:
receiving, by the donor DU, first indication information from the donor CU; and
generating, by the donor DU, the first data packet in response to the first indication information.

10. A communication method, comprising:
receiving, by a first node, a first data packet, wherein the first data packet comprises first information, and the first information indicates that a destination node of the first data packet does not belong to a network segment to which a previous-hop node of the first node belongs; and
generating, by the first node, a third data packet based on the first data packet, wherein the third data packet comprises second information, and the second information indicates that the destination node of the first data packet belongs to a network segment to which a next-hop node of the first node belongs.

11. The communication method according to claim 10, wherein
the first data packet comprises third information, and the third information indicates to change the first information to the second information.

12. A communication method, comprising:
generating, by a first node, a first data packet, wherein the first data packet comprises first information, and the first information indicates a destination node of the first data packet, or the first information indicates a network segment to which a destination node of the first data packet belongs, or the first information indicates whether a destination node of the first data packet belongs to a network segment to which the first node belongs; and
sending, by the first node, the first data packet to a second node.

13. The communication method according to claim 12, wherein the first information is carried in a routing identifier that is in a backhaul adaptation protocol layer BAP layer packet header of the first data packet.

14. The communication method according to claim 12, wherein the first information is carried in a reserved bit that is in a backhaul adaptation protocol layer BAP layer packet header of the first data packet.

15. The communication method according to claim 12, wherein the first information is located in a first area of a header of the first data packet, the first data packet further comprises second information, and the second information indicates that the first data packet comprises the first information.

16. The communication method according to claim 12, wherein the first information comprises an identifier of the destination node of the first data packet, or an identifier of the network segment to which the destination node of the first data packet belongs.

17. The communication method according to claim 13, wherein the first data packet is generated based on a second data packet, and the method further comprises:
obtaining, by the first node, the second data packet, wherein the second data packet comprises user plane F1 tunnel endpoint information; and
generating, by the first node, the routing identifier based on the user plane F1 tunnel endpoint information.

18. The communication method according to claim 14 or 15, wherein the first data packet is generated based on a second data packet, and the method further comprises:
obtaining, by the first node, the second data packet, wherein the second data packet comprises user plane F1 tunnel endpoint information; and
generating, by the first node, the first information based on the user plane F1 tunnel endpoint information.

19. The communication method according to claim 13, wherein the first data packet is generated based on a second data packet, and the method further comprises:
obtaining, by the first node, the second data packet; and
generating, by the first node, the routing identifier based on one or more of a control plane F1 message type, a stream control transmission protocol SCTP association identifier, a terminal device identifier, an SCTP stream identifier, a non-F1 interface traffic type, and internet protocol IP header information that correspond to the second data packet.

20. The communication method according to claim 13, wherein the first data packet is generated based on a second data packet, and the method further comprises:
obtaining, by the first node, the second data packet; and
generating, by the first node, the first information based on one or more of a control plane F1 message type, an SCTP association identifier, a terminal device identifier, an SCTP stream identifier, a non-F1 interface traffic type, and IP header information that correspond to the second data packet.

21. The communication method according to claim 20, wherein the SCTP association identifier is based on one or more of an IP address of the first node, a port number of the first node, an IP address of a donor node of the first node, and a port number of the donor node of the first node.

22. The communication method according to any one of claims 17 to 21, wherein the method further comprises:
receiving, by the first node, first indication information from the donor node of the first node; and
generating, by the first node, the first data packet in response to the first indication information.

23. A communication device, comprising:
a processing unit, configured to generate a first data packet, wherein the first data packet comprises first information, and the first information indicates a donor node to which a destination node of the first data packet belongs, or the first information indicates a network segment to which a destination node of the first data packet belongs, or the first information indicates whether a destination node of the first data packet belongs to a network segment controlled by the communication device; and
a transceiver unit, configured to send the first data packet to a first node.

24. The communication device according to claim 23, wherein the first information is carried in a routing identifier that is in a backhaul adaptation protocol layer BAP layer packet header of the first data packet.

25. The communication device according to claim 23, wherein the first information is carried in a reserved bit that is in a backhaul adaptation protocol layer BAP layer packet header of the first data packet.

26. The communication device according to claim 23, wherein the first information is located in a first area of a header of the first data packet, the first data packet further comprises second information, and the second information indicates that the first data packet comprises the first information.

27. The communication device according to claim 23, wherein the transceiver unit is further configured to:
send routing configuration to the first node, wherein the routing configuration comprises information about the donor node to which the destination node of the first data packet belongs or information about the network segment to which the destination node of the first data packet belongs.

28. The communication device according to claim 23, wherein the first information comprises an identifier of the donor node to which the destination node of the first data packet belongs, or an identifier of the network segment to which the destination node of the first data packet belongs.

29. The communication device according to claim 24, wherein the first data packet is generated based on a second data packet, and the transceiver unit is further configured to:
receive the second data packet, wherein the second data packet comprises internet protocol IP header information; and
the processing unit is further configured to:
generate the routing identifier based on the IP header information.

30. The communication device according to claim 25 or 26, wherein the first data packet is generated based on a second data packet, and the transceiver unit is further configured to:
receive the second data packet, wherein the second data packet comprises IP header information; and
the processing unit is further configured to:
generate the first information based on the IP header information.

31. The communication device according to claim 29 or 30, wherein the first donor node comprises a donor CU and a donor DU, and the transceiver unit is further configured to:
receive first indication information from the donor CU; and
the processing unit is further configured to:
generate the first data packet in response to the first indication information.

32. A communication device, comprising:
a transceiver unit, configured to receive a first data packet, wherein the first data comprises first information, and the first information indicates that a destination node of the first data packet does not belong to a network segment to which a previous-hop node of the communication device belongs; and
a processing unit, configured to generate a third data packet based on the first data packet, wherein the second data packet comprises second information, and the second information indicates that the destination node of the first data packet belongs to a network segment to which a next-hop node of the communication device belongs.

33. The communication device according to claim 32, wherein
the first data packet comprises third information, and the third information indicates to change the first information to the second information.

34. A communication device, comprising:
a processing unit, configured to generate a first data packet, wherein the first data packet comprises first information, and the first information indicates a destination node of the first data packet, or the first information indicates a network segment to which a destination node of the first data packet belongs, or the first information indicates whether a destination node of the first data packet belongs to a network segment to which the communication device belongs; and
a transceiver unit, configured to send the first data packet to a second node.

35. The communication device according to claim 34, wherein the first information is carried in a routing identifier that is in a backhaul adaptation protocol layer BAP layer packet header of the first data packet.

36. The communication device according to claim 34, wherein the first information is carried in a reserved bit that is in a backhaul adaptation protocol layer BAP layer packet header of the first data packet.

37. The communication device according to claim 34, wherein the first information is located in a first area of a header of the first data packet, the first data packet further comprises second information, and the second information indicates that the first data packet comprises the first information.

38. The communication device according to claim 34, wherein the first information comprises an identifier of the destination node of the first data packet, or an identifier of the network segment to which the destination node of the first data packet belongs.

39. The communication device according to claim 35, wherein the first data packet is generated based on a second data packet, and the processing unit is further configured to:
obtain the second data packet, wherein the second data packet comprises user plane F1 tunnel endpoint information; and
generate the routing identifier based on the user plane F1 tunnel endpoint information.

40. The communication device according to claim 36 or 37, wherein the first data packet is generated based on a second data packet, and the processing unit is further configured to:
obtain the second data packet, wherein the second data packet comprises user plane F1 tunnel endpoint information; and
generate the first information based on the user plane F1 tunnel endpoint information.

41. The communication device according to claim 35, wherein the first data packet is generated based on a second data packet, and the processing unit is further configured to:
obtain the second data packet; and
generate the routing identifier based on one or more of a control plane F1 message type, a stream control transmission protocol SCTP association identifier, a terminal device identifier, an SCTP stream identifier, a non-F1 interface traffic type, and internet protocol IP header information that correspond to the second data packet.

42. The communication device according to claim 35, wherein the first data packet is generated based on a second data packet, and the processing unit is further configured to:
obtain the second data packet; and
generate the first information based on one or more of a control plane F1 message type, an SCTP association identifier, a terminal device identifier, an SCTP stream identifier, a non-F1 interface traffic type, and IP header information that correspond to the second data packet.

43. The communication device according to claim 42, wherein the SCTP association identifier is based on one or more of an IP address of the communication device, a port number of the communication device, an IP address of a donor node of the communication device, and a port number of the donor node of the communication device.

44. The communication device according to any one of claims 39 to 43, wherein the transceiver unit is further configured to:
receive first indication information from the donor node of the communication device; and
the processing unit is further configured to:
generate the first data packet in response to the first indication information.

45. A communication device, comprising a processor and a memory, wherein
the processor is configured to execute instructions stored in the memory, to enable the communication device to perform the method according to any one of claims 1 to 9.

46. A communication device, comprising a processor and a memory, wherein
the processor is configured to execute instructions stored in the memory, to enable the communication device to perform the method according to claim 10 or 11.

47. A communication device, comprising a processor and a memory, wherein
the processor is configured to execute instructions stored in the memory, to enable the communication device to perform the method according to any one of claims 12 to 22.

48. A computer-readable storage medium, wherein the computer-readable storage medium stores a computer program, and when the computer program is run on a computer, the computer is enabled to perform the method according to any one of claims 1 to 22.

49. A computer program product, wherein when the computer program product runs on a computer, the computer performs the method according to any one of claims 1 to 22.
